**Europäisches Patentamt**

**European Patent Office**

**Office européen des brevets**

(19)

(11) Veröffentlichungsnummer: **0 247 352 B1**

(12) # EUROPÄISCHE PATENTSCHRIFT

(45) Veröffentlichungstag der Patentschrift:
13.02.91 Patentblatt 91/07

(51) Int. Cl.$^5$: **H02P 5/40, H02P 1/50**

(21) Anmeldenummer: **87105808.7**

(22) Anmeldetag: **21.04.87**

(54) **Bürstenlose Erregervorrichtung für eine Synchronmaschine.**

(30) Priorität: **30.04.86 US 858361**

(43) Veröffentlichungstag der Anmeldung:
**02.12.87 Patentblatt 87/49**

(45) Bekanntmachung des Hinweises auf die
Patenterteilung:
**13.02.91 Patentblatt 91/07**

(84) Benannte Vertragsstaaten:
**CH DE GB LI SE**

(56) Entgegenhaltungen:
**US-A- 3 381 196**

(56) Entgegenhaltungen:
**US-A- 3 539 890**
**US-A- 3 573 577**
**US-A- 3 845 369**
**PATENT ABSTRACTS OF JAPAN, Band 7, Nr.
186 (E-193)[1331], 16. August 1983; & JP-A-58
089 083 (TOKYO SHIBAURA DENKI K.K.) 27
-05-1983**

(73) Patentinhaber: **Siemens Aktiengesellschaft
Wittelsbacherplatz 2
D-8000 München 2 (DE)**

(72) Erfinder: **Stich, Frederick Alan
2665 North Lake Drive
Milwaukee Wisconsin 53211 (US)**

## Beschreibung

Die Erfindung betrifft eine Vorrichtung zur bürstenlosen Erregung einer Synchronmaschine.

Deren Stator wird mit Wechselstrom gespeist, um ein rotierendes elektromagnetisches Feld im Luftspalt zu erzeugen. Ferner besitzen sie eine von Gleichstrom gespeiste Erregerwicklung zur Erzeugung eines durch die Lage der Erregerwicklung orientierten magnetischen Feldes, welches mit dem rotierenden Feld so zusammenwirkt, daß der Rotor synchron mit der Frequenz des speisenden Wechselstromes umläuft. Beim Anlauf einer Synchronmaschine wirken Stator- und Erregerwicklung wie die Primär- und Sekundärwicklung eines Transformators. Hohe Spannungen können somit in der Erregerwicklung induziert werden, welche nachteilig auf die Spulenisolation einwirken und deren Lebensdauer begrenzen. Zur Vermeidung dieses unerwünschten Effektes wird die Erregerwicklung während des Anlaufes mit einem Anlaufwiderstand abgeschlossen. Unmittelbar vor bzw. nach Erreichen des Synchronismus wird der Anlaufwiderstand weggeschaltet, um die den Erregerstrom bereitstellende Quelle nicht unnötig zu belasten.

Anlaufvorrichtungen für Synchronmaschinen haben gewöhnlich Mittel, die den für die Zuschaltung der Erregung geeigneten Zeitaugenblick auswählen. Die meisten Systeme verwenden Mittel, welche den während des Anlaufvorganges in der Erregerwicklung induzierten Strom auswerten. Wenn dessen Frequenz einen vorgegebenen unteren Schwellwert erreicht hat, verbinden diese Systeme die Erregerstromquelle mit der Erregerwicklung.

Steuersysteme für Synchronmaschinen haben üblicherweise Schaltungen mit einem Anlaufwiderstand, um den während der Anlaufphase in der Erregerwicklung induzierten Strom abzuleiten. Ferner verfügen solche Steuersysteme üblicherweise über Erregungsvorrichtungen zur Speisung der Erregerwicklung, um die Synchronmaschine bei synchroner Drehzahl zu betreiben bzw. um das zur Synchronisation notwendige Drehmoment zu erzeugen. Es ist allgemein üblich, den Rotor mit einem rotierenden Gleichrichter zur Bereitstellung des Erregergleichstromes zu versehen. Ferner ist es bekannt, Halbleiterschaltelemente für die Zu- bzw. Abschaltung des Anlaßwiderstandes in den Erregerstromkreis zu verwenden. Hierdurch soll verhindert werden, daß die Gleichrichter und die Wicklungsisolation beschädigt werden, wenn die in der Erregerwicklung induzierte Gegenspannung die eigentliche Erregerspannung um einen vorgegebenen Maximalwert überschritten hat.

Falls die Erregung bei den günstigsten Werten von Maschinendrehzahl und Rotorwinkel zugeschaltet wird, ist es sehr wahrscheinlich, daß die Synchronmaschine in den Synchronismus gezogen wird. Falls der Zeitpunkt für die Zuschaltung des Erregergleichstromes nicht optimal gewählt wird, kann die Maschine wieder außer Tritt fallen und muß eventuell vom Netz getrennt werden bzw. der Stator bezieht stoßartig größere Leistung aus dem Netz. Es ist Voraussetzung für einen Synchronisationsversuch, daß die Maschine bereits auf eine der Synchrondrehzahl sehr nahe kommende Drehzahl hochgefahren ist bzw. wurde, und der Schlupf zwischen Rotor und Magnetfeld gering ist. Ein für die Zuschaltung der Erregung günstiger Rotorwinkel ist bevorzugt dann erreicht, wenn der in der Erregerwicklung induzierte Strom bei einem Vorzeichenwechsel gerade den Wert Null angenommen hat. In diesem Moment sind die Verkettungen des magnetischen Flusses zwischen Stator und Rotor maximal und der Erregerstrom wird sich bei Anlegen der Erregergleichspannungsquelle schnell aufbauen.

Aus der US-Patentschrift 3 381 196 ist bereits eine Steuervorrichtung für eine bürstenlose Synchronmaschine bekannt. Das Steuersystem benutzt einen halbleitenden Erregerschalter, z.B. einen Thyristor, um im Normalbetrieb die Erregerwicklung mit Erregerstrom zu versorgen bzw. diese während der Anlaufphase von der Stromversorgung zu trennen. Das Steuersystem enthält zudem Mittel zum Erfassen der Schlupffrequenz. Ferner wird ein Halbleiterschalter für die Zu- bzw. Abschaltung des Anlaßwiderstandes benutzt. Der Erregerschalter für die Aufschaltung der Erregung wird bei einer Phasenlage der Schlupfspannung betätigt, bei der der Halbleiterschalter für den Anlaßwiderstand mit umgekehrter Vorspannung beaufschlagt ist. Auf diese Weise wird der Anlaufwiderstand in dem Moment abgeschaltet, in dem der Erregerstrom beginnt durch die Erregerwicklung zu fließen. Hierbei besteht allerdings die Gefahr, daß der Motor nicht in den Synchronismus gezogen wird, wenn der Halbleiterschalter gerade während der negativen Halbperiode der Schlupfspannung die Stromführung abgibt. Ferner besteht die Gefahr, daß die Mittel zur Erfassung der Schlupffrequenz bei bestimmten Fehlerzuständen, z.B. bei einer nicht eingeschwungenen Phase der Statorwicklung, eine recht hohe konstante Meßspannung an der Erregerwicklung erfassen. Ein solches konstantes Frequenzsignal verhindert die Zuschaltung der Erregung, weil scheinbar die Schlupffrequenz niemals bis auf den vorbestimmten optimalen Frequenzwert abnimmt, ab dem der Erregerschalter gezündet wird.

Aus der US-Patentschrift 3 573 577 ist ein weiteres Steuersystem für eine bürstenlose Synchronmaschine mit steuerbaren Halbleitererregerschaltmitteln bekannt, welches die Abgabe der Stromführung der Halbleiterschalter verhindert, bevor die Maschine in den Synchronismus gezogen wird. Dieses Steuersystem stellt auch bei einem Maschinenfehler mit einer Spannung konstanter Frequenz an der Erregerwicklung sicher, daß die Maschine bei Reluktanzanlauf in den Synchronismus gezogen wird.

Das Steuersystem besitzt mehrere Thyristoren, um die Erregerwicklung aus einer Wechselspannungsquelle zu speisen, und Meßvorrichtungen zur Erfassung des Zeitpunktes, in dem aufgrund der aktuellen Werte von Maschinengeschwindigkeit und Rotorwinkel eine Zuschaltung der Erregung am vorteilhaftesten erscheint. Das System verfügt über zusätzliche Mittel, welche von den Meßvorrichtungen angesteuert werden. Diese beaufschlagen die Thyristoren mit einer Zündimpulsfolge, damit die Thyristoren nicht vor Erreichen des Synchronismus stromlos werden. Halbleiterschalter steuern die Einschaltung des Anlaßwiderstandes in den Erregerstromkreis. Zudem sind die Schalter mit einem Shuntwiderstand beschaltet. Dieser wird so ausgewählt, daß der Strom durch die Reihenschaltung aus Shuntwiderstand und Anlaßwiderstand bei geöffnetem Schalter größer ist als der Haltestrom für die Thyristoren. Dieser verhindert ein Verlöschen der Thyristoren, bevor die Maschine synchronisiert ist. Diese bekannte Erregervorrichtung beinhaltet fünf steuerbare Halbleitersteuerelemente, welche Verlustwärme während des Betriebes erzeugen. Diese muß mit Hilfe von Kühlvorrichtungen abgeführt werden, wodurch die gesamte Anordnung umfangreicher wird.

Der Leistungsteil der jeweils aus den Figuren 1 der US-3 573 577 und US-3 381 196 bekannten Schaltungen enthält jeweils einen Umformer mit einer rotierenden Sekundärwicklung, welche mit einem Gleichrichter zur Gleichrichtung der in den rotierenden Teil transformierten Wechselspannung beschaltet ist. Dem Gleichrichter ist parallelgeschaltet zum einen die Erregerwicklung der zu speisenden Synchronmaschine, und zum anderen eine Reihenschaltung aus einem Anlaßwiderstand und einer Parallelschaltung aus einem antiparallel zueinander angeordneten steuerbaren Halbleiterschaltelement, einer Diode und mindestens einem Widerstand. Zwischen einem Ende des Gleichrichters und einem Ende der Erregerwicklung sind mehrere steuerbare Halbleiterschaltelemente zur Einstellung der gewünschten Höhe des Erregerstromes angeordnet. Ein derartiger Leistungsteil hat den Nachteil, daß zur getrennten Gleichrichtung und Amplitudeneinstellung der Spannung bzw. des Stromes im rotierenden Erregerteil eine Vielzahl von Bauelementen benötigt werden. Hierdurch werden die Erregervorrichtung und die dafür notwendigen Mittel zur Kühlung sehr aufwendig.

Der Erfindung liegt somit die Aufgabe zugrunde, eine insbesondere im Leistungsteil einfacher ausführbare bürstenlose Erregervorrichtung anzugeben, die weniger als fünf steuerbare Halbleiterschaltelemente und einfacher gestaltete Kühlvorrichtungen benötigt. Zudem soll die Größe der Erregung direkt einstellbar und/oder regelbar sein und bei Netzstörungen zum Aufrechterhalten des synchronen Betriebszustandes unterstützbar sein. Ferner sollte die Entregung der Maschine bei Abschaltung und die Wiedererregung zur erneuten Synchronisation leicht möglich sein.

Die Aufgabe wird durch die im Anspruch 1 enthaltene Vorrichtung gelöst. In den Unteransprüchen sind vorteilhafte Ausführungen der erfindungsgemäßen Vorrichtung angegeben.

Mit Hilfe der nachfolgend kurz angegebenen Figuren wird die Erfindung näher erläutert. Dabei zeigt

FIG 1 ein Blockschaltbild der erfindungsgemäßen bürstenlosen Erregervorrichtung,

FIG 2b und 2a eine vorteilhafte Ausführungsform der ersten Steuerungsvorrichtung mit einer Entregungssteuerschaltung und einer Schutzbeschaltung,

FIG 3b und 3a eine vorteilhafte Ausführungsform der identischen zweiten und dritten Steuerungsvorrichtung mit einem Zündimpulsübertrager und einer Schutzbeschaltung, wobei die Schaltung der

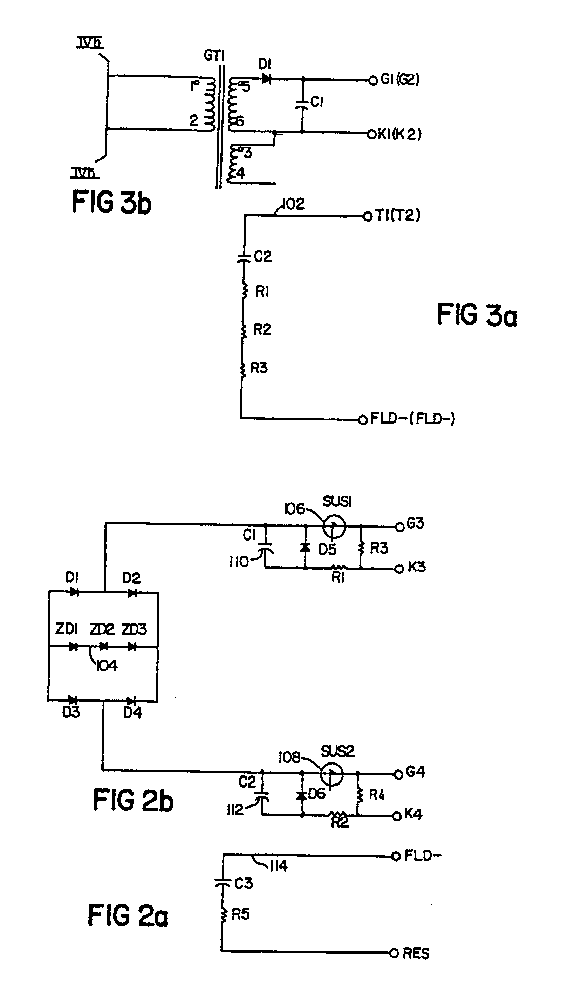

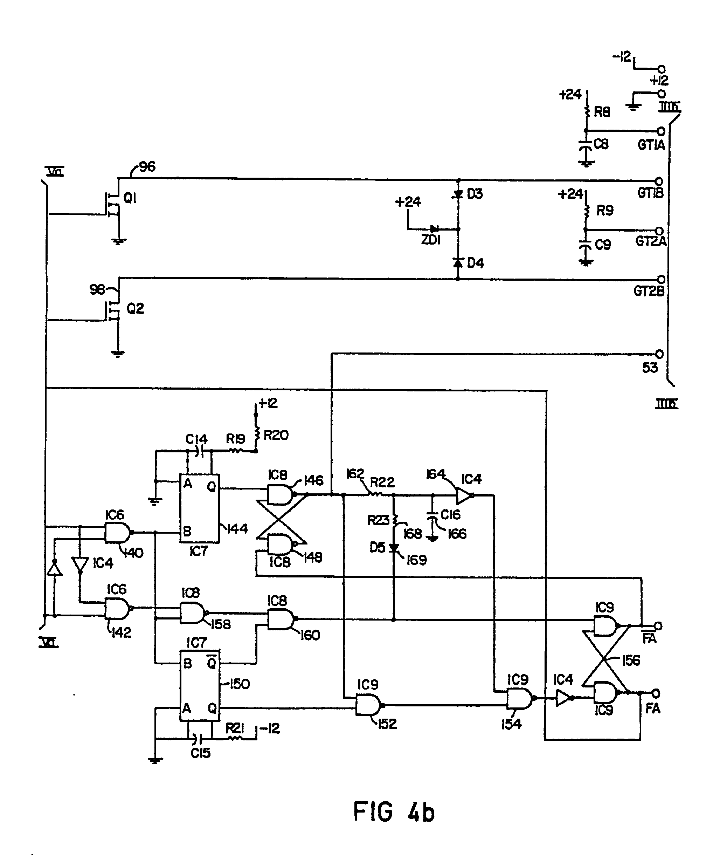

FIG 3b entlang der Linie IVb-IVb mit der in der FIG 4b enthaltenen Schaltung verbunden ist,

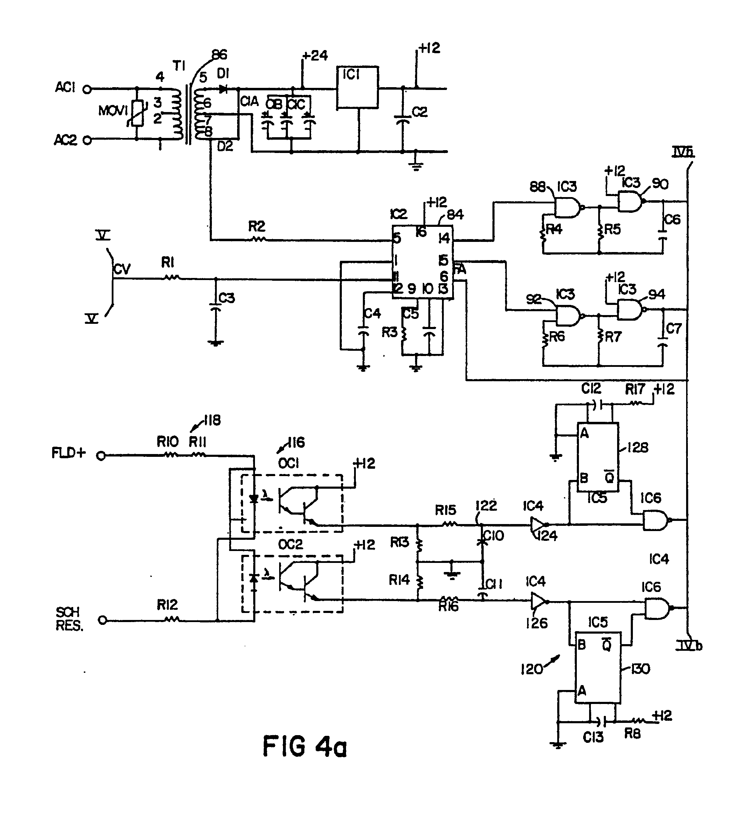

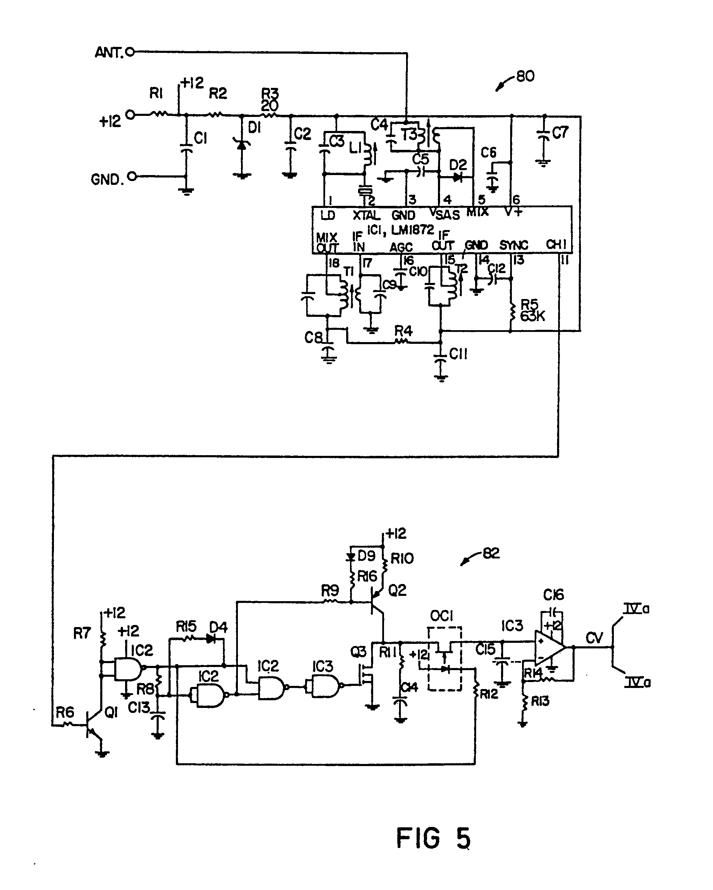

FIG 4a und 4b vorteilhafte Ausführungsformen der vierten Steuerungsvorrichtung mit einer Stromversorgung, Phasenkontroll-, Signalkoppler- und Erregerkreiszuschaltsteuervorrichtungen, wobei FIG 4a entlang der Linie IVb-IVb mit der FIG 4b, entlang der Linie V-V mit der FIG 5 verbunden ist, und die FIG 4b entlang der Linie IVa-IVa mit der FIG 4a und entlang der Linie IIIb-IIIb mit der FIG 3b verbunden ist,

FIG 5 eine vorteilhafte Ausführungsform der fünften Steuerungsvorrichtung mit einem Empfänger für ein Erregungskorrektursignal, wobei die FIG 5 entlang der Linie IVa-IVa mit der FIG 4a verbunden ist,

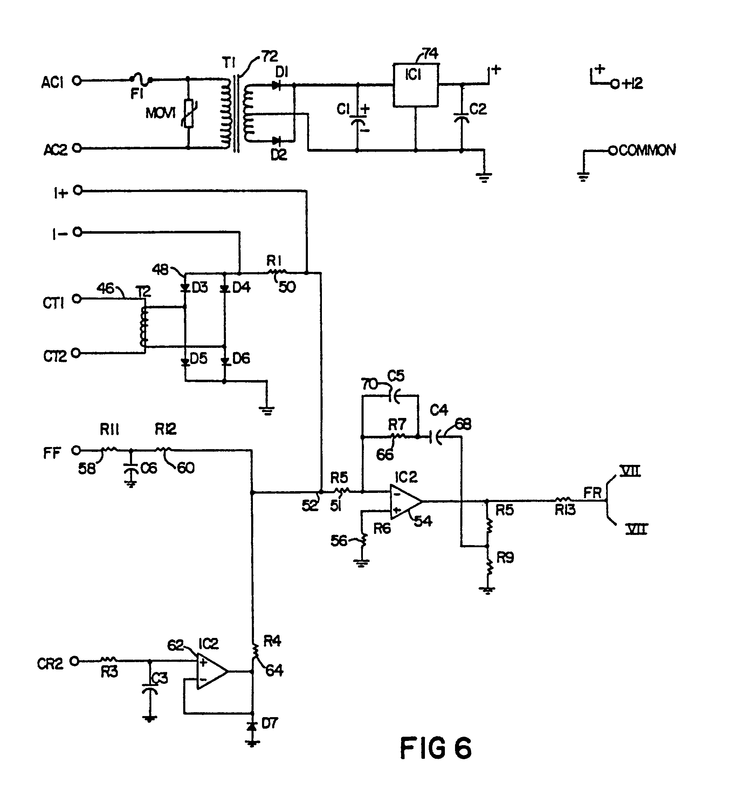

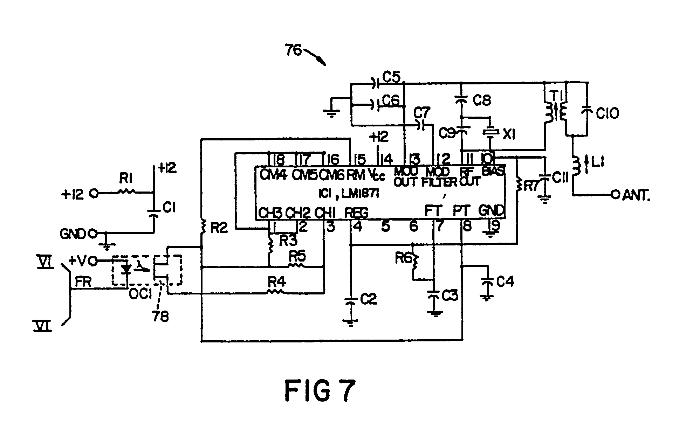

FIG 6 eine vorteilhafte Ausführung der sechsten Steuerungsvorrichtung mit einem Erregerstromregler und einer ortsfesten Stromversorgung, wobei die FIG 6 entlang der Linien VII-VII mit der FIG 7 verbunden ist,

FIG 7 eine vorteilhafte Ausführungsform der siebten Kontrollvorrichtung mit einem Sender für das Erregungskorrektursignal, wobei die FIG 7 entlang der Linie VI-VI mit der FIG 6 verbunden ist,

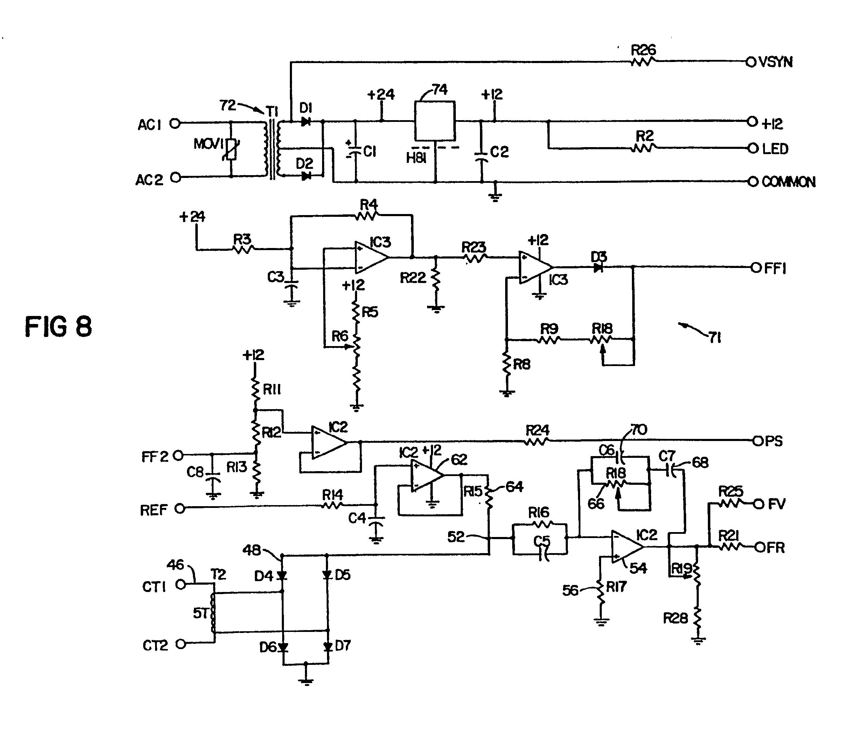

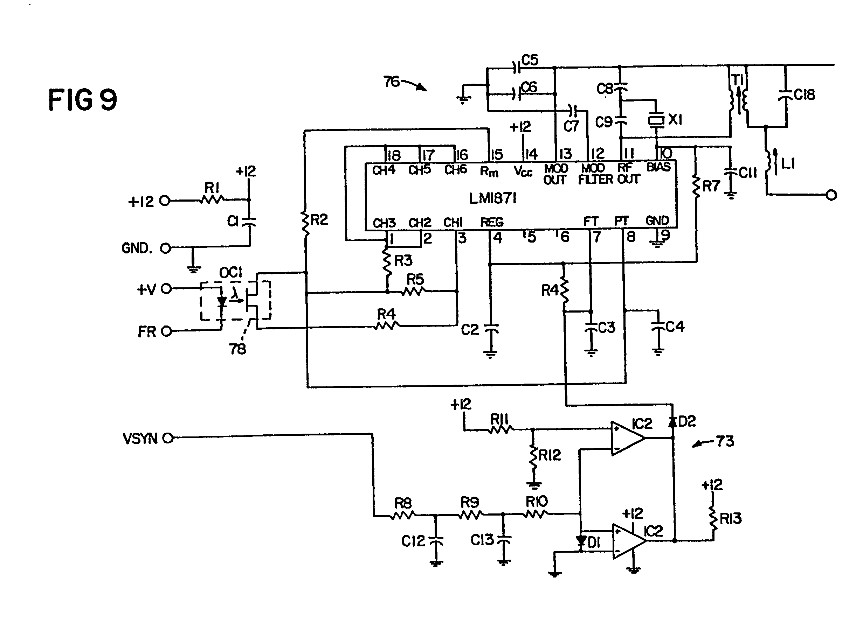

FIG 8 eine der FIG 6 entsprechende Vorrichtung mit einer zusätzlichen Erregungsunterstützungsvorrichtung,

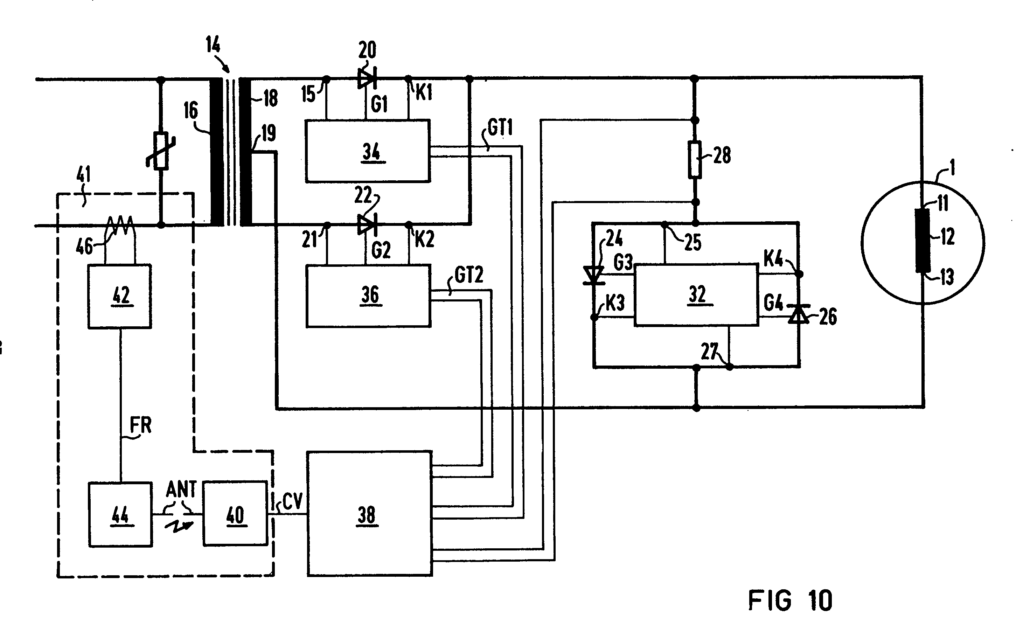

FIG 9 eine der FIG 7 entsprechende Vorrichtung mit einer zusätzlichen Synchonisierschaltung,

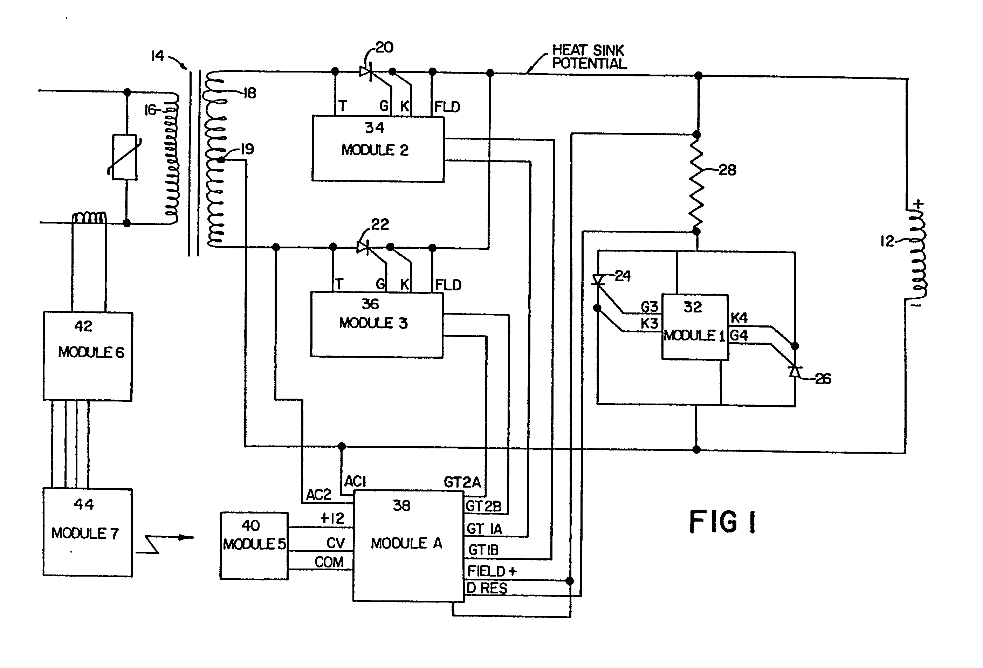

FIG 10 ein der FIG 1 entsprechendes weiteres Blockschaltbild der erfindungsgemäßen bürstenlosen Erregervorrichtung,

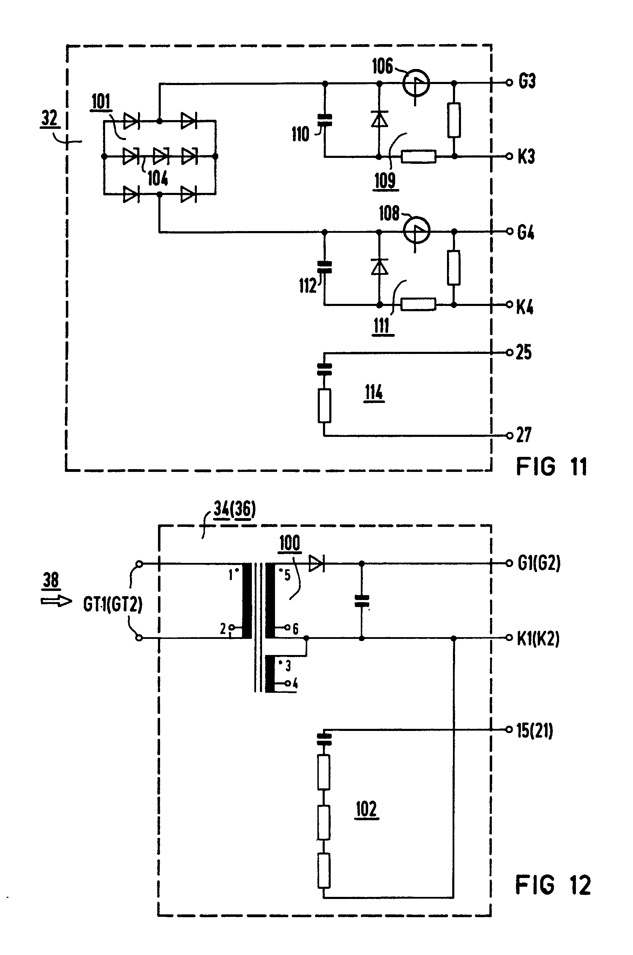

FIG 11 eine der FIG 2a und 2b entsprechende weitere Darstellung einer vorteilhaften Ausführungsform der ersten Steuerungsvorrichtung,

FIG 12 eine der FIG 3a und 3b entsprechende weitere Darstellung einer vorteilhaften Ausführungsform der zweiten bzw. dritten Steuerungsvorrichtung,

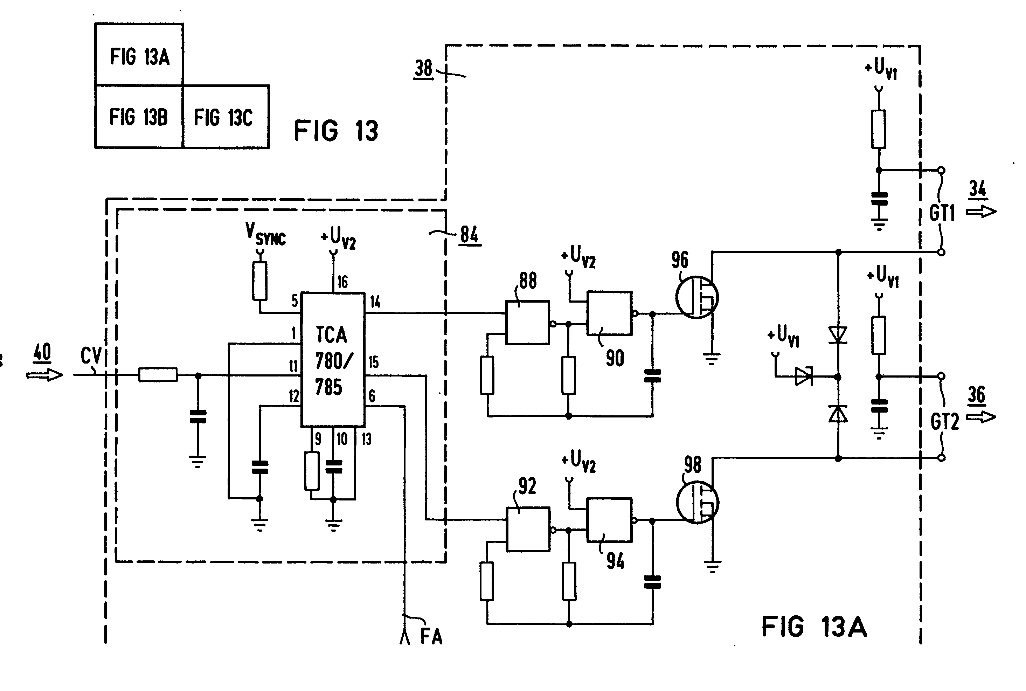

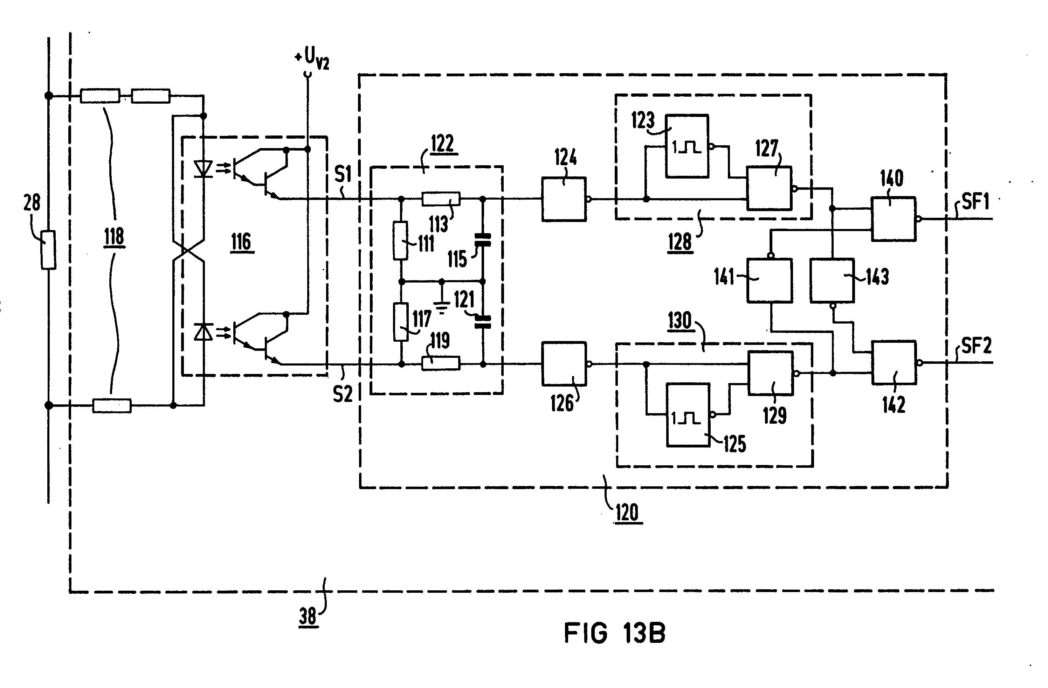

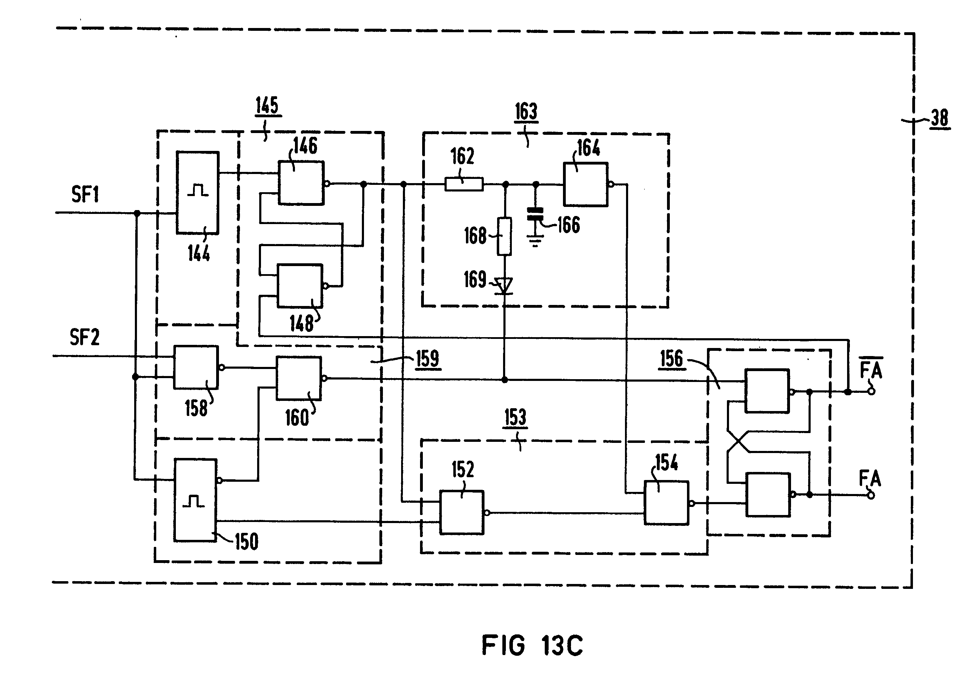

FIG 13a, 13b und 13c eine der FIG 4a und 4b entsprechende weitere Darstellung einer vorteilhaften Ausführungsform der vierten Steuerungsvorrichtung,

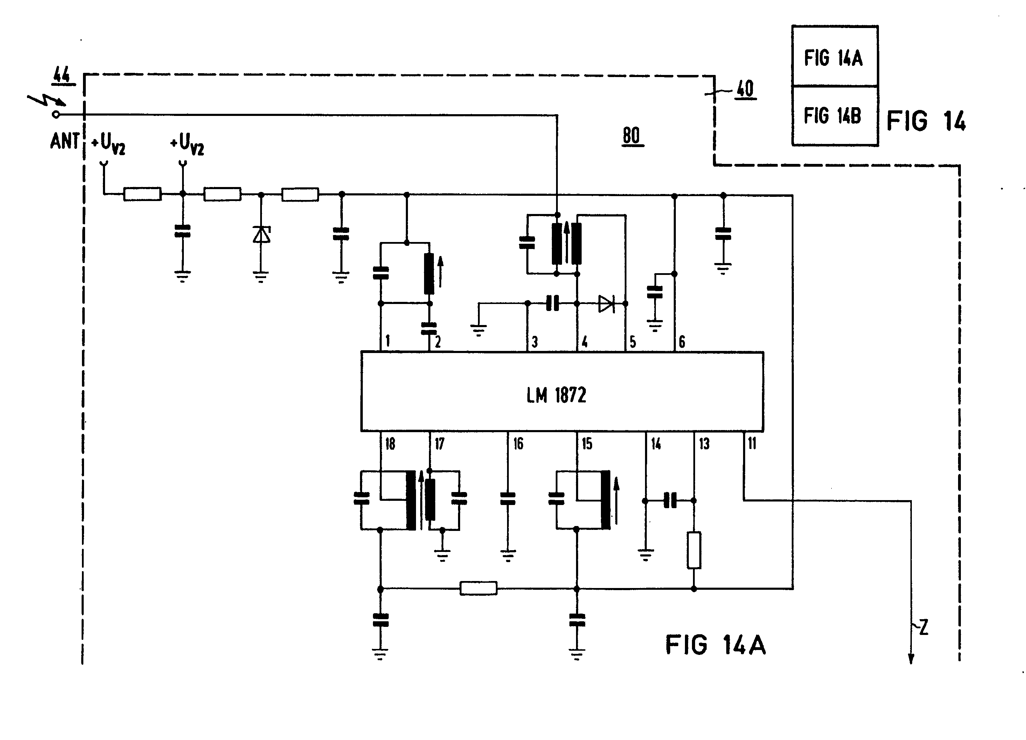

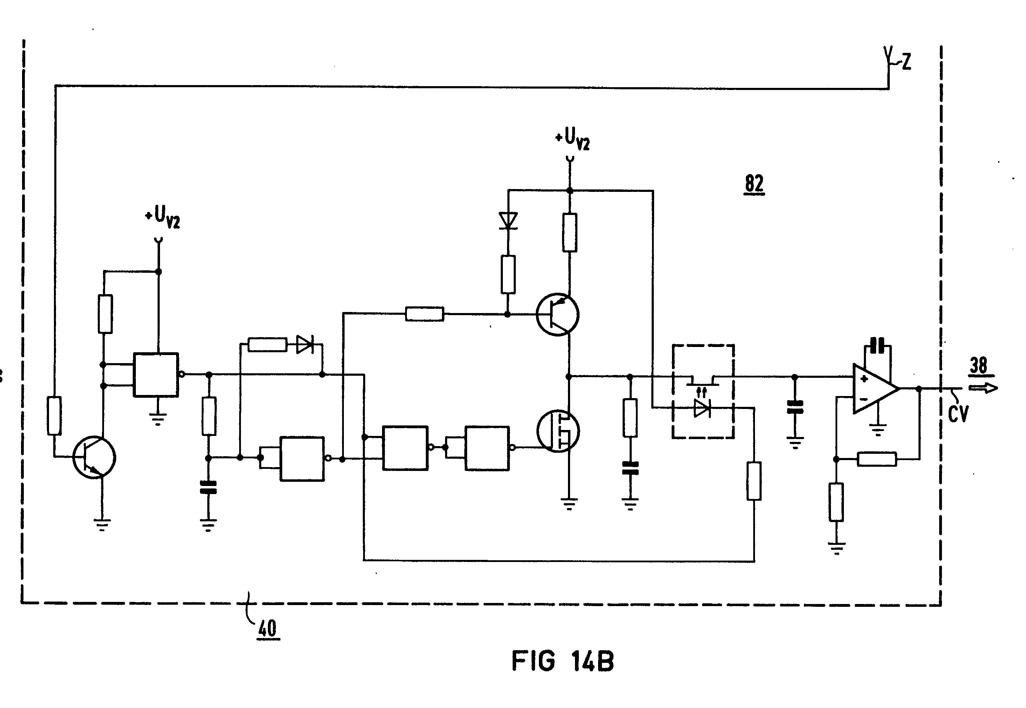

FIG 14a und 14b eine der FIG 5 entsprechende weitere Darstellung einer vorteilhaften Ausführungsform der fünften Steuerungsvorrichtung,

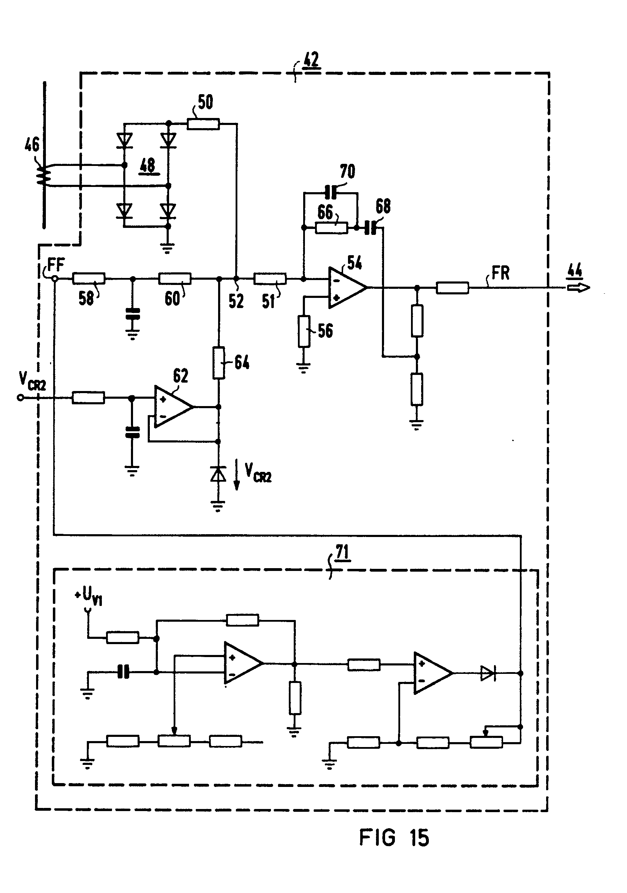

FIG 15 eine der FIG 6 und 8 entsprechende weitere Darstellung einer vorteilhaften Ausführungsform der sechsten Steuerungsvorrichtung, und

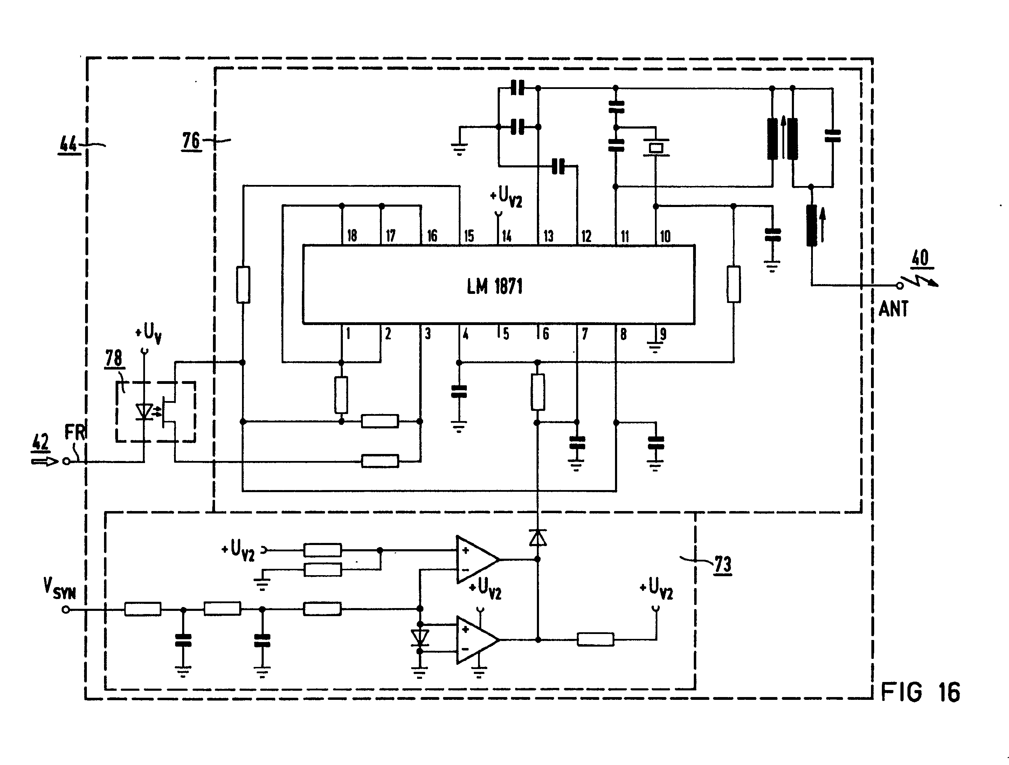

FIG 16 eine der FIG 7 und 9 entsprechende weitere Darstellung einer vorteilhaften Ausführungsform der siebten Steuerungsvorrichtung.

In den Figuren 1 und 10 ist je ein Blockschaltbild der erfindungsgemäßen bürstenlosen Erregervorrichtung für eine Synchronmaschine dargestellt, insbesondere für einen dreiphasigen Synchronmotor. Bekanntlich besteht ein solcher Synchronmotor aus einer dreiphasigen Statorwicklung, welche in den Blockschaltbildern nicht dargestellt ist, und aus einer Erregerwicklung 12 mit je einem positiven und negativen Wicklungsende 11 und 13. Wird die Statorwicklung von einem entsprechenden dreiphasigen Wechselstromnetz gespeist, so bildet sich im Luftspalt des Motors ein umlaufendes magnetisches Feld, wodurch zusammen mit der Erregerwicklung das Drehmoment für den Anlauf bzw. den synchronen Dauerbetrieb erzeugt wird. Die Erregerwicklung 12 wird mit Erregergleichstrom von einem rotierenden Umformer 14 versorgt, welcher als eine rotationsunabhängige, verzögerungsarme Energiequelle dient. Die Primärwicklung 16, als feststehender Teil des rotierenden Umformers 14, wird von einer geeigneten einphasigen Wechselstromquelle gespeist, welche bevorzugt die gleiche Frequenz wie das den Stator speisende Wechselstromnetz hat. Die Sekundärwicklung 18, als rotierender Teil des Umformers, hat einen Mittelabgriff 19, welcher mit dem negativen Ende 13 der Erregerwicklung 12 verbunden ist. Das positive Ende 11 der Erregerwicklung ist über zwei steuerbare Halbleiterschaltelemente 20 und 22 mit beiden Enden der Sekundärwicklung 18 verbunden.

Es ist besonders vorteilhaft, den rotierenden Umformer 14 als einen einphasigen Manteltransformator mit Luftspalt auszuführen. Der Rotor hat dabei die Form einer Wicklungsspule, deren Körper aus speziellem elektrischen Kernstahl besteht, und die als Sekundärwicklung 18 dient. Ein solcher rotierender Umformer kann die Erregungsvorrichtung rotationsunabhängig, also auch im Stillstand, mit Energie versorgen.

Es ist besonders vorteilhaft, daß bei Verwendung eines solchen rotierenden Umformers mit in der Mitte angezapfter Sekundärwicklung 18 nur vier steuerbare Leistungshalbleiterschaltelemente 20, 22, 24 und 26 benötigt werden. Als Halbleiterschaltelemente werden bevorzugt Thyristoren eingesetzt. Die einen Elektroden der Halbleiterschaltelemente 20 und 22, insbesondere deren Kathoden, sind an einem gemeinsamen Potential angeschlossen. Sie sind insbesondere aus wärmetechnischen Gründen nicht in isolierten Baukörpern untergebracht. Ferner soll hierdurch der Aufbau des rotierenden Teils der Erregungsvorrichtung vereinfacht werden. Dagegen ist es besonders vorteilhaft, die Halbleiterschaltelemente 24 und 26 in einem gemeinsamen und gegenüber der Unterlage isolierten Baukörper unterzubringen. Die beiden Halbleiterschaltelemente 20 und 22, welche als erstes bzw. zweites steuerbares Halbleiterschaltelement bezeichnet werden, verbinden jeweils eines der Enden der Sekundärwicklung 18 des rotierenden Umformers 14 mit einem Ende der Erregerwicklung 12, insbesondere dem positiven Ende 11. Die Halbleiterschaltelemente 24 und 26, welche als drittes bzw. viertes steuerbares Halbleiterschaltelement bezeichnet werden, sind zueinander antiparallel geschaltet. In Reihe mit einem Anlaßwiderstand 28 sind sie der Erregerwicklung 12 parallel geschaltet.

Mit Hilfe der Halbleiterschaltelemente 20 und 22 wird der Erregergleichstrom im geeigneten Zeitpunkt zugeschaltet und dessen gewünschte Größe eingestellt. Die Halbleiterschaltelemente 24 und 26 dienen dazu, die Erregerwicklung 12 während eines Anlaufes der Synchronmaschine mit dem Anlaßwiderstand 28 abzuschließen. Auf diese Weise wird die in der Erregerwicklung während des asynchronen Maschinenanlaufs induzierte Energie abgeleitet. Es ist besonders vorteilhaft, alle vier Halbleiterschaltelemente 20, 22, 24 und 26 auf einem gemeinsamen rotierenden Kühlkörper anzuordnen. Die zum Betrieb dieser Halbleiterschaltelemente benötigten elektronischen Steuerelemente werden erfindungsgemäß bevorzugt auf sieben Steuerungsvorrichtungen 32, 34, 36, 38, 40, 42 und 44 aufgeteilt. Diese werden auch als erste bis siebte Steuerungsvorrichtung bezeichnet. Dabei sind die ersten drei Steuerungsvorrichtungen 32, 34 und 38 rotierende Komponenten, welche vorteilhaft mit den vier Halbleiterschaltelementen auf einem gemeinsamen Kühlkörper angeordnet sind. Die beiden Steuerungsvorrichtungen 38 und 40 sind ebenfalls rotierende Komponenten, welche vorteilhaft ebenso auf dem gleichen Kühlkörper angeordnet werden können. Die beiden Steuerungsvorrichtungen 42 und 44 gehören nicht zum rotierenden Teil der erfindungsgemäßen bürstenlosen Erregervorrichtung. In einer anderen Ausführungsform kann es besonders vorteilhaft sein, die Steuerungsvorrichtungen 42, 44 und 40 als gemeinsame Vergleichervorrichtung 41 auszuführen, welche zur Regelung der erfindungsgemäßen Erregervorrichtung geeignete Signale erfaßt und in den rotierenden Teil einkoppelt.

Ein derart aufgebauter Leistungsteil hat den besonderen Vorteil, daß sowohl für die Gleichrichtung als auch für die Amplitudeneinstellung der in den rotierenden Teil der Erregervorrichtung übertragenen Spannung bzw. den Erregerstrom nur zwei Bauelemente, nämlich die Halbleiterschaltelemente 20, 22 mit dazugehörigen Kühlvorrichtungen benötigt werden. Insbesondere aufgrund der auf den rotierenden Teil einwirkenden Fliehkräfte ist eine derartige Vereinfachung der Erregervorrichtung besonders vorteilhaft.

Die erste Steuerungsvorrichtung 32, welche auch als Entregungssteuerung bezeichnet werden kann, steuert die Abführung der insbesondere während des Anlaufvorganges in der Erregerwicklung gebildeten Energie. Hierzu werden die dritten und vierten Halbleiterschaltelemente 24 und 26 abhängig von der an der Erregerwicklung induzierten Spannung an ihren Zündelektroden mit Zündimpulsen beaufschlagt. Dieser Vorgang ist unabhängig von sämtlichen anderen Steuerungsvorgängen in der erfindungsgemäßen bürstenlosen Erregungsvorrichtung.

Die identischen zweiten und dritten Steuerungsvorrichtungen 34 und 36 dienen zur Ansteuerung des ersten bzw. zweiten Halbleiterschaltelementes 20 bzw. 22 und beinhalten bevorzugt je eine Zündimpulsübertragervorrichtung. Ferner ist es besonders vorteilhaft, wenn diese Steuerungsvorrichtungen noch Schutzbeschaltungen für die Halbleiterschaltelemente enthalten.

Die Halbleiterschaltelemente 24 und 26 benötigen keine eigenen Zündübertragervorrichtungen, da deren Steuerstrecken direkt von der ersten Steuerungsvorrichtung 32 mit unmittelbar aus der über den Halbleiterschaltelementen abfallenden Spannung abgeleiteten Zündimpulsen versorgt werden. Wie desweiteren ausführlich erläutert wird, wird dasjenige der beiden antiparallelen Halbleiterschaltelemente 24 und 26 gezündet, dessen Anoden-Kathoden-Spannung positiv ist und deren Betrag einen vorgegebenen Schwellenwert überschritten hat.

Die vierte Steuerungsvorrichtung 38 versorgt als eine übergeordneten Steuerschaltung die identischen zweiten und dritten Steuerungsvorrichtungen 34 und 36 mit Signalen, welche bevorzugt als Zündsignale an die Halbleiterschaltelemente 20 bzw. 22 weitergegeben werden. Hierzu wird die aktuelle Spannung am Anlaßwiderstand 28 ausgewertet und aus Größe, Frequenz und Phasenlage des durch den Anlaßwiderstand fließenden Stromes der Zeitpunkt bestimmt, in den die Erregung besonders vorteilhaft zugeschaltet werden kann bzw. abgeschaltet werden muß. Ferner ist es vorteilhaft, wenn die Steuerungsvorrichtung 38 ein zusätzliches Steuersignal CV von der Vergleichervorrichtung 41 bzw. der darin enthaltenen fünften Steuerungsvorrichtung 40 bezieht und ein Phasenkontrollsignal bildet. Dieses bestimmt die gewünschte Größe des aktuellen Erregerstromes durch Beeinflussen der Dauer der Zündimpulse für die ersten und zweiten steuerbaren Halbleiterschaltelemente 20 und 22.

Die sechste Steuerungsvorrichtung 42 in der Vergleichervorrichtung 41 ist bevorzugt über einen Stromwandler mit der Primärwicklung 16 des rotierenden Umformers 14 verbunden. Die Amplitude des so erfaßten Umformerprimärstromes ist ein nahezu lineares Abbild des in die Erregerwicklung 12 fließenden Erregergleichstromes. Die Genauigkeit dieser Erregerstromerfassung ist lediglich durch mögliche nichtlineare Übertragungseigenschaften des rotierenden Umformers 14 begrenzt. Aus einem Vergleich des erfaßten Erregergleichstromes mit einem Referenzwert wird bei Abweichungen ein Erregungskorrektursignal FR gebildet.

Dieses Erregungskorrektursignal wird am Ausgang ANT von der ortsfesten siebten Steuerungsvorrichtung 44 abgegeben, welche als ein Sender wirkt. Als zugehöriger Empfänger dient die fünfte Steuerungsvorrichtung 40, welche das an am Eingang ANT aufgenommene Signal wieder in ein Gleichstromsignal variabler Amplitude rückführt und als reproduziertes Erregungskorrektursignal in Form des Phasenkontrollsignales CV in die vierte Steuerungsvorrichtung 38 einspeist.

In den Figuren 6, 8 und 15 sind vorteilhafte Ausführungsformen der sechsten Steuerungsvorrichtung 42 dargestellt. Die in FIG 6 dargestellte Grundschaltung ist gemäß der Darstellung in FIG 8 bevorzugt um eine Erregungsunterstützungsvorrichtung 71 ergänzt. Wesentliche Schaltungsteile der Ausführungsformen der Figuren 6 und 8 sind zur besseren Übersicht in FIG 15 zusammengefaßt. Die erfindungsgemäße sechste Steuerungsvorrichtung enthält bevorzugt eine Erregungsregelschaltung, deren Kernstück ein Regelverstärker 54 ist. Eingangsgröße ist der über den Stromwandler 46 auf der Eingangsseite des rotierenden Umformers 14 als Wechselgröße erfaßte Erregerstrom. Aufgrund der hohen Induktivität des Erregerstromkreises hat der so erfaßte Strom eine rechteckförmige Form. Ein Brückengleichrichter 48 am Eingang der sechsten Steuerungsvorrichtung wandelt das Meßsignal in ein Gleichstromsignal um, welche über die Widerstände 50 und 51 dem invertierenden Eingang des Operationsverstärkers 54 zugeführt wird. Der nichtinvertierende Eingang ist über den Widerstand 56 mit dem Massepotential verbunden. Im Normalbetrieb des Operationsverstärkers stellt der Summationspunkt 52 die virtuelle Erde mit Nullpotential dar. In diesen Knotenpunkt werden bevorzugt drei Stromsignale eingespeist, von denen das erste der über den Widerstand 50 bewertete Meßwert des Erregerstromes ist. Die Summe der beiden anderen Stromsignale bilden den Sollwert für den Erregerstrom, wobei das eine Stromsignal sich ergibt aus dem auf die Summe der beiden Widerstände 58 und 60 bezogenen Wert der an der Klemme FF anliegenden Spannung, und das zweite Stromsignal sich ergibt aus dem Quotienten der vorgebbaren Steuerspannung $V_{CR2}$ und dem Wert des Widerstandes 64. Zur Sollwertbildung kann durch beliebiges Anlegen einer Spannung an der Klemme FF bzw. Auswahl einer Steuerspannung $V_{CR2}$ eines der beiden oder beide Stromsignale gleichzeitig herangezogen werden. Zum hochohmigen Abgriff der Spannung $V_{CR2}$ ist es besonders vorteilhaft, einen als Spannungsfolger beschalteten Elektrometerverstärker 62 mit vorgeschaltetem RC-Glied zu verwenden. Aus der Abweichung des Erregerstromistwertes vom Summensollwert wird durch den Regelverstärker 54 das Erregungskorrektursignal FR gebildet. Der Regelverstärker selbst hat bedingt durch das Rückkopplungsnetzwerk aus dem Widerstand 66 und den Kondensatoren 68 und 70 ein proportional-integrales Übertragungsverhalten. Das Erregungskorrektursignal FR am Ausgang der sechsten Steuerungsvorrichtung 42 wird vorteilhaft der siebten Steuerungsvorrichtung 44 zur weiteren Verarbeitung übergeben.

Es ist besonders vorteilhaft, wenn die sechste Steuerungsvorrichtung eine zusätzliche Erregungsunterstützungsvorrichtung 71 enthält ist, welche beispielhaft in den Figuren 8 bzw. 15 dargestellt ist. Diese Vorrichtung ist ein wichtiger Bestandteil der vorliegenden Erfindung und ermöglicht auch dann die Aufrechterhaltung des synchronen Betriebszustandes, wenn die Statorspannung aufgrund einer Abnahme der Versorgungsspannung bzw. aus anderen Gründen zurückgeht. Die Erregungsunterstützungsvorrichtung versucht den mit der Netzfrequenz synchronen Lauf der Maschine während eines solchen Spannungseinbruchs aufrechtzuerhalten, indem mehr Erregerstrom in die Erregerwicklung eingespeist wird. Dies führt zu einer Erhöhung der an der Erregerwicklung abfallenden Spannung, wodurch aufgrund des kapazitiven Leistungsfaktors wiederum die den Stator speisende Netzspannung gestützt wird. Es ist besonders vorteilhaft, wenn das von der Erregungsunterstützungsvorrichtung gebildete Steuersignal als ein zusätzlicher Sollwert in die Erregungsregelschaltung, z.B. an der Klemme FF eingespeist wird, wie dies in der FIG 15 dargestellt ist. Einbrüche in der Netzspannung, welche von der Erregungsunterstützungsvorrichtung durch Auswerten einer der Versorgungsspannungen, insbesondere der Spannung $U_{V1}$, detektiert werden, führen somit automatisch zu einer Erhöhung des über die Widerstände 58 und 60 in den Regelverstärker 54 eingespeisten Sollwertes und damit zu einer Erhöhung des als Stellsignal für die Größe des aktuellen Erregerstromes dienenden Erregungskorrektursignales FR.

In den Figuren 7, 9 und 16 sind vorteilhafte Ausführungsformen der siebten Steuerungsvorrichtung 44 dargestellt. Dabei ist es besonders vorteilhaft, wenn die Grundschaltung der FIG 7 um eine in der FIG 9 dargestellte Synchronisierschaltung 73 ergänzt wird. Zur besseren Übersicht sind wesentliche Schaltungsteile der siebten Steuerungsvorrichtung 44 in der FIG 16 zusammengefaßt. Die siebte Steuerungsvorrichtung hat die Aufgabe, das von der Erregungsregelschaltung gebildete Erregungskorrektursignal FR in den rotierenden Teil der erfindungsgemäßen bürstenlosen Erregervorrichtung abzugeben. Hierzu wird das Signal von einer aus einer Leuchtdiode und einem Feldeffekttransistor bestehenden Vorrichtung 78 potentialfrei in einen variablen Widerstandswert umgewandelt. Dieser steuert einen Sender 76, welcher vorteilhaft mit Hilfe eines integrierten Schaltkreises aufgebaut werden kann, z.B. mit dem Baustein LM-1871 der Firma National Semi-Conductor. Der Sender setzt den Wert des einstellbaren Widerstandes in eine Signalfolge mit einstellbarem Pulspausenverhältnis um, welche mit möglichen weiteren Informationen einem hochfrequenten Trägersignal aufmoduliert wird. Das Trägersignal kann vorzugsweise eine Frequenz von 49 MHz haben. Das modulierte Trägersignal wird am Ausgang der siebten Steuerungsvorrichtung 44 an einem als Antenne dienenden Leitungsstück ANT abgegeben und von einem ebenfalls als Antenne dienenden weiteren Leitungsstück ANT am Eingang der fünften Steuerungsvorrichtung 40 aufgenommen, welches als Bestandteil des rotierenden Teiles der Erregungsvorrichtung nur eine kurze Wegstrecke entfernt ist.

Es ist besonders vorteilhaft, wenn die siebte Steuerungsvorrichtung 44 zusätzliche eine Synchronisierschaltung 73 enthält. Vorteilhafte Ausführungsformen davon sind in den FIG 9 bzw. 16 dargestellt. Der Sender 76 wird hierdurch veranlaßt, das kodierte Erregungskorrektursignal nur einmal pro Netzhalbperiode abzusenden. Dies ist besonders vorteilhaft für einen sicheren Dauerbetrieb der erfindungsgemäßen Erregungsvorrichtung, bei der der Erregerstrom auf der Wechselstromseite des rotierenden Umformers 14 erfaßt wird und somit stark oberschwingungshaltig sein und/oder von der idealen Rechteckform abweichen kann. Hierzu wird der Synchronisierschaltung 73 bevorzugt eine Synchronisationsspannung $V_{SYN}$ mit der Frequenz des speisenden Netzes am Eingang zu geführt. Der Phasenwinkel der Übertragung des Erregungskorrektursignales relativ zur Netzfrequenz wird vorteilhaft so eingestellt, daß keine Signalübertragung und Zündung der Halbleiterschaltelemente 20, 22 gleichzeitig stattfinden. Auf diese Weise wird besonders vorteilhaft eine mögliche Störung der Signalübertragung durch die Zündung der Halbleiterschaltelemente vermieden.

In den Figuren 5 bzw. 14a und 14b ist eine vorteilhafte Ausführungsform der fünften Steuerungsvorrichtung 40 dargestellt. Diese kann gemäß FIG 10 als ein weiteres Element der Vergleichervorrichtung 41 betrachtet werden, welche vorteilhaft aus der sechsten, siebten und fünften Steuerungsvorrichtung zusammengesetzt ist. Mit einer rotierenden Antenne ANT wird das vom Sender 76 abgesetzte Signal empfangen und einem Empfänger 80 zugeführt. Es ist besonders vorteilhaft, diesen mit Hilfe eines integrierten Schaltkreises aufzubauen, z.B. mit dem Baustein LM-1872 der Firma National Semi-Conductor. Eine solche Ausführungsform ist in den Figuren 5 bzw. 14a dargestellt. Das am Pin 11 des integrierten Schaltkreises gebildete Ausgangssignal wird einem in den Figuren 5 bzw. 14b dargestellten Ausgangsschaltkreis zugeführt, welcher die Steuersignalkette veränderlichen Puls-Pausen-Verhältnisses wieder in ein Gleichspannungssignal einstellbarer Amplitude rückführt. Dieses durch Demodulation wiedergewonnene Erregungskorrektursignal, was in den Figuren 5 bzw. 14b mit CV bezeichnet ist, wird der vierten Steuerungsvorrichtung 38 zugeführt und steuert dort die Einschaltdauern der steuerbaren Halbleiterschaltelemente 20, 22.

In den Figuren 4a, 4b bzw. 13a bis 13c ist eine vorteilhafte Ausführungsform der vierten Steuerungsvorrichtung 38 dargestellt. Das wiedergewonnene Erregungskorrektursignal CV wird dabei einer Phasenkontrollschaltung zugeführt, welche in den Figuren 13a bzw. 4a, 4b dargestellt ist. Die Phasenkontrollschaltung setzt das Gleichspannungssignal CV in Zündimpulse veränderlicher Pulsbreite für die ersten bzw. zweiten Halbleiterschaltelemente 20 und 22 um. Diese Zündimpulse werden von den Ausgängen GT1 und GT2 der vierten Steuerungsvorrichtung an die zweite bzw. dritte Steuerungsvorrichtung 34, 36 weitergegeben. Es ist besonders vorteilhaft, wenn die Phasenkontrollschaltung einen Phasenkontrollschaltkreis 84 enthält, welcher bevorzugt mit Hilfe eines integrierten Schaltkreises aufgebaut ist. Hierzu ist z.B. der Siemens TCA 780 oder TCA 785 einsetzbar. Das in den bevorzugten Ausführungsformen der Figuren 4a bzw. 13a dem Eingang 11 des integrierten Schaltkreises über ein RC-Glied zugeführte Signal CV wird in pulsdauermodulierte Zündimpulse umgesetzt, welche an den Klemmen 14 bzw. 15 des integrierten Schaltkreises gegeben werden. Es ist besonders vorteilhaft, wenn die Zündimpulsfolgen in höherfrequente Pulsketten umgesetzt werden, welche besser zur Ansteuerung der Halbleiterschaltelemente geeignet sind. Hierzu dienen die aus den NAND-Gattern 88 und 90 bzw. 92 und 94 bestehenden selbstgesteuerten astabilen Schaltkreise. Diese steuern schließlich am Ausgang der Phasenkontrollschaltung die Leistungsschalter 96 und 98 an. Es ist besonders vorteilhaft, wenn die Bildung der Zündimpulse in der Phasenkontrollschaltung auf die Frequenz des speisenden Netzes synchronisiert wird. Hierzu wird bevorzugt dem Phasenkontrollschaltkreis 84 eine Synchronisationsspannung $V_{SYNC}$ mit der Frequenz des speisenden Netzes am Pin 5 zugeführt. Zusammen mit dem in der siebten Steuerungsvorrichtung 44 ebenfalls auf die Netzfrequenz synchronisierten Absenden des Erregungskorrektursignales ist es hierdurch möglich, daß die Zündung des ersten bzw. zweiten Halbleiterschaltelementes 20 bzw. 22 nicht mit einer Übertragung des Erregungskorrektursignales in den rotierenden Teil zusammenfällt. Auf diese Weise werden besonders vorteilhaft mögliche Störungen der Signalübertragung durch die Zündung der Halbleiterschaltelemente vermieden.

Die Bildung der Zündimpulse für das erste bzw. zweite Halbleiterschaltelement darf erst dann freigegeben werden, wenn ein Anlaufvorgang der Synchronmaschine nahezu beendet ist und diese sich bereits sehr nahe dem synchronen Betriebszustand befindet. Hierzu dient ein drittes Freigabesignal FA, welches in einem ebenfalls in der vierten Steuerungsvorrichtung 38 enthaltenen Schaltkreis zur Steuerung der Erregerkreiszuschaltung gebildet wird. Vorteilhafte Ausführungsformen davon sind in den Figuren 13a, 13b bzw. 4a, 4b dargestellt.

Gemäß den Darstellungen in den Figuren 13b bzw. 4a besteht der Eingang dieses Schaltkreises zur Steuerung der Erregerkreiszuschaltung aus einer Optokopplervorrichtung 116, welche die am Anlaßwiderstand 28 abfallende Spannung detektiert. Auf diese Weise wird die Größe, das Vorzeichen und die Frequenz der während des Anlaufens der Synchronmaschine in der Erregerwicklung induzierten Spannung erfaßt, und vorzeichenabhängig in je ein erstes bzw. zweites Steuerungssignal S1 bzw. S2 am Ausgang der Optokopplervorrichtung abgebildet. Diese besteht bevorzugt aus zwei Leuchtdioden zur vorzeichenrichtigen Erfassung der induzierten Spannung. Der Stromfluß durch die Leuchtdioden, und damit deren Lichtabgabefähigkeit, kann durch in den Eingangskreis eingeschaltete Widerstände 118 eingestellt werden. Die Leuchtdioden steuern je einen Darlington-Verstärker mit Eingangs-Fototransistor an.

Es ist besonders vorteilhaft, wenn das erste und zweite Steuersignal mit Hilfe einer Signalaufbereitungsvorrichtung 120 in ein erstes bzw. zweites aufbereitetes Steuersignal SF1, SF2 übergeführt wird. Eine vorteilhafte Ausführungsform einer solchen Signalaufbereitungsvorrichtung besteht aus je einem RC-Filter, je einem Signalformer, je einem Hochfrequenzfilter und einer gemeinsamen Komplementüberwachungsvorrichtung für die beiden Steuersignale, und ist in den Figuren 13b bzw. 14a, 14b dargestellt. Die RC-Filter 122 bestehen aus je einem Eingangswiderstand 111 bzw. 117 zur Erfassung des ersten bzw. zweiten Steuersignals S1, S2. Diesen parallelgeschaltet ist das eigentliche Glättungsglied aus dem Widerstand 113 und dem Kondensator 115 bzw. dem Widerstand 119 und dem Kondensator 121. Das geglättete erste bzw. zweite Steuersignal steht an den Verbindungspunkten von Glättungswiderstand und -kondensator an, und wird je einem als Signalformer dienenden ersten bzw. zweiten Inverter 124 bzw. 126 zugeführt. Den Signalformern ist je ein Hochfrequenzfilter 128 bzw. 130 nachgeschaltet. Diese bestehen aus je einem NAND-Gatter 127 bzw. 129, deren einem Eingang das Ausgangssignal des jeweiligen Signalformers 124 bzw. 126 direkt und deren anderen Eingang indirekt über je eine monostabile Kippstufe 123 bzw. 130 zugeführt ist. Es ist besonders vorteilhaft, wenn die Eingänge der monostabilen Kippstufen 123 bzw. 125 nicht nachtriggerbar sind. Auf diese Weise werden alle Zustandsänderungen des ersten bzw. zweiten Steuersignales unterdrückt, die eine kürzere Zeitdauer haben als die durch die monostabilen Kippstufen vorgegebenen Zeitdauern. Schließlich werden die gefilterten Signale einer am Ausgang der Signalaufbereitungsvorrichtung angeordneten Komplementüberwachungsvorrichtung zugeführt, welche aus den beiden NAND-Gattern 140, 142 und den beiden Invertern 141, 143 besteht. Jedes der NAND-Gatter wird dabei an einem Eingang mit dem gefilterten Signal und am anderen Eingang mit dem invertierten, komplementären gefilterten Signal versorgt. Auf diese Weise wird sichergestellt, daß immer nur eines der beiden aufbereiteten Steuersignale SF1 bzw. SF2 einen aktiven Signalzustand hat.

Besonders vorteilhaft enthält die vierte Steuerungsvorrichtung 38 weiterhin einen Schlupfdetektor 144, dem ein erster Signalspeicher 145 nachgeschaltet ist. Vorteilhafte Ausführungsformen dieser Elemente sind in den Figuren 13c bzw. 4b dargestellt. Dabei besteht der Schlupfdetektor aus einer monostabilen Kippstufe 144 mit nachtriggerbarem Eingang. Die Kippstufe wird bei jeder fallenden Flanke des ersten aufbereiteten Steuersignales SF1 erneut angestoßen. Die Ablaufzeit der Kippstufe wird bevorzugt so eingestellt, daß diese dem Wert der Schlupfperiode entspricht, bei dessen Erreichen am Ende eines Anlaufvorganges die Synchronmaschine durch Zuschaltung der Erregung synchronisiert werden kann. Ist die tatsächliche Schlupffrequenz nur noch geringfügig kleiner als die durch die Ablaufzeit der Kippstufe 144 gewünschte Frequenz, so tritt eine hochfrequente Impulskette am Ausgang der Kippstufe auf. Hierdurch wird ein erster, aus den NAND-Gattern 146 und 148 bestehender Signalspeicher 145 gesetzt. Das stationäre erste Freigabesignal an dessen Ausgang zeigt an, daß der gewünschte Schlupfwert erreicht ist. Das Rücksetzen des ersten Signalspeichers erfolgt gleichzeitig mit einem Abschalten der Erregung. Hierzu dient die fallende Flanke des am Ausgang des Schaltkreises zur Steuerung der Erregerkreiszuschaltung gebildeten dritten Steuersignales FA.

Es ist besonders vorteilhaft, wenn zum Auffinden des für die Zuschaltung der Erregung optimal geeigneten Zeitpunktes neben dem Erreichen eines geeigneten Schlupfwertes noch der Zeitpunkt herangezogen wird, in dem die Stromrichtung durch den Anlaßwiderstand gerade von negativ nach positiv wechselt, so daß der Strom nun in die positive Klemme 11 der Erregerwicklung 12 fließt. Zu dessen Erfassung dient ein ebenfalls im Schaltkreis zur Steuerung der Erregerkreiszuschaltung der vierten Steuerungsvorrichtung 38 enthaltener Winkeldetektor. Eine vorteilhafte Ausführungsform davon ist in den Figuren 4b bzw. 13c dargestellt und besteht aus einer monostabilen Kippstufe 150. Diese wird vom ersten aufbereiteten Steuersignal SF1 angestoßen und erzeugt ein zweites Freigabesignal, welches bevorzugt 10 msec lang ist. Hierdurch ist der gesuchte Zeitpunkt definiert, in dem am günstigsten zur Synchronisation der Maschine die Erregung zugeschaltet und der Strom durch den Entladewiderstand unterbrochen wird. Das dritte Freigabesignal FA wird somit dann erzeugt, wenn der Schlupfdetektor durch das erste Freigabesignal anzeigt, daß die Maschine den gewünschten Schlupfwert erreicht hat und gleichzeitig der Winkeldetektor das zweite Freigabesignal abgibt. Beide Signale werden bevorzugt durch ein in einer Zuschaltlogik 153 enthaltenes NAND-Gatter 152 zusammengeführt. Dessen Ausgangssignal setzt schließlich über ein weiteres in der Zuschaltlogik 153 enthaltenes NAND-Gatter 154 einen Ausgangssignalspeicher 156, welcher letztlich das dritte Freigabesignal FA für die Zuschaltung der Erregung abgibt.

Insbesondere bei gering belasteten und durch Ausnutzung des Reluktanzmomentes anlaufenden Maschinen ist es besonders vorteilhaft, wenn die Zuschaltung der Erregung erst eine einstellbare Zeitdauer nach Erreichen des gewünschten Schlupfwertes freigegeben wird. Diese Zeitdauer, welche bevorzugt 2 sec beträgt, wird durch einen im Schaltkreis zur Steuerung der Erregerkreiszuschaltung zusätzlich enthaltenen Zeitgeber 163 bereitgestellt. Eine vorteilhafte Ausführungsform dieses Zeitgebers ist in den Figuren 4b bzw. 13c dargestellt und besteht im wesentlichen aus einem Inverter 164, welcher von einem RC-Glied 162, 166 angesteuert wird. Die Zeitkonstante des RC-Gliedes bestimmt die Verzögerungszeit des Zeitgebers. Dieser wird von dem im ersten Signalspeicher 145 hinterlegten ersten Freigabesignal des Schlupfdetektors angesteuert und gibt nach Ablauf der Verzögerungszeit über das NAND-Glied 154 die Ansteuerung des Ausgangssignalspeichers 156 durch das NAND-Glied 152 frei.

Schließlich enthält der Schaltkreis zur Steuerung der Erregerkreiszuschaltung eine aus den beiden NAND-Gliedern 158 und 160 bestehende Schaltung 159 zur Rücksetzung des AusgangssignalSpeichers 156. Diese Rücksetzschaltung wird über das NAND-Glied 158 durch das erste und zweite aufbereitete Steuersignal SF1, SF2 der Signalaufbereitungsvorrichtung 120 angesteuert, und beaufschlagt über das zweite NAND-Gatter 160 den Ausgangssignal-Speicher 156 mit einem Rücksetzsignal, solange auf diese Weise ein Stromfluß durch den Anlaßwiderstand 128 detektiert wird. Das Rücksetzsignal wird durch ein von der monostabilen Kippstufe 150 zum zweiten Eingang des NAND-Gatters 160 geführtes Steuersignal nur unterbrochen, so lange der Winkeldetektor 150 das zweite Freigabesignal abgibt. Eine Synchronisation der Maschine durch Zuschaltung der Erregung sollte nur bei Vorhandensein des zweiten Freigabesignales versucht werden. Der Eingang des Inverters 164 im Zeitgeber 163 ist über einen Widerstand 168 und eine Diode 169 zusätzlich mit der Signalleitung zum Rücksetzen des Ausgangssignalspeichers verbunden.

In den Figuren 3a, 3b bzw. 12 sind vorteilhafte Ausführungsformen der identischen zweiten bzw. dritten Steuerungsvorrichtung 34 bzw. 36 dargestellt. Diese enthalten je eine Zündimpulsübertragervorrichtung 100 zur Übergabe der von der vierten Steuerungsvorrichtung 38 bereitgestellten Zündimpulse an die Steuerstrecken G1, K1 bzw. G2, K2 des ersten bwz. zweiten steuerbaren Halbleiterschaltelementes 20, 22. Bevorzugt ist in jeder der Steuerungsvorrichtungen 34 bzw. 36 eine zusätzliche RC-Schutzbeschaltung 102 enthalten, welche parallel zu den Anoden-Kathoden-Strecken des ersten bzw. zweiten Halbleiterschaltelementes angeordnet sind und transiente Anteile in den an den Halbleiterschaltelementen abfallenden Spannungen dämpfen.

Schließlich ist in den Figuren 2a, 2b bzw. 11 eine vorteilhafte Ausführungsform der ersten Steuerungsvorrichtung 32 dargestellt. An die Steuerstrecke G3, K3 des dritten bzw. G4, K4 des vierten Halbleiterschaltelementes wird dann ein Zündimpuls abgegeben, wenn die Anoden-Kathoden-Spannung des jeweiligen Halbleiterschaltelementes positiv ist. Zudem muß diese einen Wert erreicht haben, der die Durchbruchspannung einer in der Diagonalen einer Gleichrichterbrücke 101 enthaltenen Zenerdiodenkette 104 überschreitet. Die Zuschaltung der Halbleiterschaltelemente 24 und 26 ermöglicht den Stromfluß durch den Anlaßwiderstand 28. Aus diesem Grund kann die erste Steuerungsvorrichtung auch als Entregungssteuerschaltung bezeichnet werden. Zudem ist es besonders vorteilhaft, wenn jeder Steuerstrecke des dritten bzw. vierten Halbleiterschaltelementes je ein Zündimpulsformer 109 bzw. 111 vorgeschaltet ist. Dieser besteht bevorzugt aus je einer in der Steuerelektrodenzuführung des jeweiligen Halbleiterschaltelementes angeordneten Vierschichtdiode 106 bzw. 108 und aus je einem zwischen der Vierschichtdiode und der Kathodenelektrode des jeweiligen Halbleiterschaltelementes angeordneten Kondensators 110 bzw. 112. Die Kombination der Bauelemente Kondensator und Vierschichtdiode an der Steuerstrecke des jeweiligen Halbleiterschaltelementes ermöglicht eine Vergrößerung der Amplitude und der steigenden Flanke der Zündimpulse.

Es ist besonders vorteilhaft, wenn getrennte Stromversorgungen für den feststehenden und den rotierenden Teil der erfindungsgemäßen bürstenlosen Erregungsvorrichtung vorgesehen sind. Die Stromversorgung für den aus der sechsten und siebten Steuerungsvorrichtung bestehenden feststehenden Teil ist vorteilhaft in der sechsten Steuerungsvorrichtung enthalten. Vorteilhafte Ausführungsformen davon sind jeweils im oberen Teil der Figuren 6 bzw. 8 dargestellt. Sie bestehen insbesondere aus einem von einer der Netzspannungen gespeisten Transformator 72 mit nachgeschaltetem Spannungsregler 74. Am Ausgang des Transformators kann auch die für die Synchronisationsschaltung 73 der siebten Steuerungsvorrichtung benötigte Netzsynchronisierspannung $V_{SYN}$ abgegriffen werden. Die Stromversorgung für den rotierenden Teil ist vorteilhaft in der vierten Steuerungsvorrichtung untergebracht. Eine vorteilhafte Ausführungsform ist im oberen Teil der Figur 4a dargestellt und enthält insbesondere einen Transformator 86 mit nachgeschaltetem Spannungsregler. Es ist besonders vorteilhaft, wenn der Transformator 86 von der Sekundärseite des rotierenden Umformers 14 gespeist wird. Am Ausgang des Transformators 86 kann bevorzugt die zur Synchronisation des Phasenkontrollschaltkreises 84 in der Phasenkontrollschaltung benötigte Netzsynchronisierspannung $V_{SYNC}$ abgegriffen werden.

## Ansprüche

1. Vorrichtung zur bürstenlosen Erregung einer Synchronmaschine (1), mit

a) einem rotierenden Umformer (14) mit in der Mitte (19) angezapfter Sekundärseite (18),

b) einem ersten und einem zweiten steuerbaren Halbleiterschaltelement (20, 22), wobei deren erste, übereinstimmende Elektroden, insbesondere die Anoden, jeweils mit der Sekundärseite des rotierenden Umformers verbunden sind, und deren zweite, übereinstimmende Elektroden, insbesondere die Kathoden, gemeinsam mit dem einen Ende (11) der mit dem anderen Ende (13) an der Mitte der Sekundärseite des rotierenden Umformers (14) angeschlossenen Erregerwicklung (12) verbunden sind,

c) einer Reihenschaltung aus einem Anlaßwiderstand (28) und zwei antiparallelen dritten und vierten steuerbaren Halbleiterschaltelementen (24, 26), welche parallel zur Erregerwicklung angeordnet ist,

d) einer ersten Steuerungsvorrichtung (32), welche die antiparallelen dritten und vierten Halbleiterschaltelemente (24, 26) abhängig von der an der Erregerwicklung (12) induzierten Spannung betätigt,

e) je einer identischen zweiten und dritten Steuerungsvorrichtung (34, 36), welche zur Gleichrichtung und zur Einstellung des der Erregerwicklung (12) zugeführten Erregerstromes das erste bzw. zweite Halbleiterschaltelement (20, 22) betätigen, und

f) einer vierten Steuerungsvorrichtung (38), welche den Strom durch den Anlaßwiderstand (28) nach Größe, Frequenz und Phasenlage erfaßt, abhängig davon Zeitpunkte bestimmt, in denen die Erregung zu- bzw. abgeschaltet wird und dementsprechend die zweite und dritte Steuerungsvorrichtung (34, 36) ansteuert (Figuren 1 und 10).

2. Vorrichtung nach Anspruch 1, **gekennzeichnet durch** eine Vergleichervorrichtung (41), welche den Erregerstrom auf der Primärseite (16) des rotierenden Umformers (14) erfaßt, bei Abweichungen von einem Referenzwert ein Erregungskorrektursignal (CV) bildet und als Eingangsgröße für die vierte Steuerungsvorrichtung (38) in den rotierenden Teil der Erregungsvorrichtung einkoppelt (FIG 10).

3. Vorrichtung nach Anspruch 2, **dadurch gekennzeichnet,** daß die Vergleichervorrichtung (41)

a) eine ortsfeste sechste Steuerungsvorrichtung (42), welche den Erregerstrom auf der Primärseite (16) des rotierenden Umformers (14) erfaßt und bei Abweichungen von dem Referenzwert das Erregungskorrektursignal (FR) bildet,

b) eine ortsfeste siebte Steuerungsvorrichtung (44), welche als ein Sender (FIG 16, 76) das Erregungskorrektursignal (FR) abgibt (ANT), und

c) eine rotierende fünfte Steuerungsvorrichtung (40), welche als ein Empfänger (Figuren 14a, 14b, 80, 82) das von der siebten Steuerungsvorrichtung abgegebene Erregungskorrektursignal als Eingangsgröße (CV) für die vierte Steuerungsvorrichtung (38) aufnimmt (ANT) (Figuren 1 und 10), enthält.

4. Vorrichtung nach Anspruch 3, **gekennzeichnet durch** eine Phasenkontrollschaltung, welche das Erregungskorrektursignal (FR) umsetzt in pulsbreitenmodulierte Zündimpulse für das erste bzw. zweite Halbleiterschaltelement (20, 22).

5. Vorrichtung nach Anspruch 4, **dadurch gekennzeichnet,** daß die vierte Steuerungsvorrichtung (38) die Phasenkontrollschaltung enthält und die pulsbreitenmodulierten Zündimpulse an die zweite bzw. dritte Steuerungsvorrichtung (34, 36) weitergibt (Figuren 1 und 10).

6. Vorrichtung nach einem der Ansprüche 4 oder 5, **dadurch gekennzeichnet,** daß die vierte Steuerungsvorrichtung einen Schaltkreis zur Steuerung der Erregerkreiszuschaltung enthält, welcher der Phasenkontrollschaltung ein drittes Freigabesignal (FA) für die Zuschaltung der Erregung zuführt (Figuren 4a, 4b bzw. 13b, 13c).

7. Vorrichtung nach Anspruch 6, **dadurch gekennzeichnet,** daß die vierte Steuerungsvorrichtung (38) eine Optokopplervorrichtung (116) enthält, welche die Spannung am Anlaßwiderstand (28) detektiert und abhängig von Größe, Vorzeichen und Frequenz des Stromes durch den Anlaßwiderstand je ein erstes und zweites Steuersignal (S1, S2) bildet (Figuren 4a und 13b).

8. Vorrichtung nach Anspruch 7, **dadurch gekennzeichnet,** daß die vierte Steuerungsvorrichtung (38) eine Signalaufbereitungsvorrichtung (120) für das erste und zweite Steuersignal (S1, S2) zur Filterung von Störungen enthält (Figuren 4a, 4b und 13b).

9. Vorrichtung nach Anspruch 8, **dadurch gekennzeichnet,** daß die Signalaufbereitungsvorrichtung (120) je ein RC-Filter (122), einen Signalformer (124, 126), ein Hochfrequenzfilter (128, 130) und eine Komplementüberwachungsvorrichtung (140 bis 143) enthält, und je ein erstes und zweites aufbereitetes Steuersignal (SF1, SF2) bildet (Figuren 4a, 4b und 13b).

10. Vorrichtung nach Anspruch 9, **dadurch gekennzeichnet,** daß das RC-Filter (122) je einen zwischen einem Ausgang der Optokopplervorrichtung (122) und Masse angeordneten ersten und dritten Widerstand (111, 117) zum Empfangen des ersten und zweiten Steuersignals enthält, und parallel dazu je eine Reihenschaltung aus einem zweiten Widerstand (113) und einem ersten Kondensator (115) bzw. einem vierten Widerstand (119) und einem zweiten Kondensator (121) zur Filterung des ersten bzw. zweiten Steuersignals angeordnet sind (Figuren 4a und 13b).

11. Vorrichtung nach Anspruch 9, **gekennzeichnet durch** einen ersten bzw. zweiten Inverter als Signalformer für das erste bzw. zweite Steuersignal (124, 126), die an der Verbindung des zweiten Widerstandes (113) mit dem ersten Kondensator (115) bzw. des vierten Widerstandes (119) mit dem zweiten Kondensator (121) angeschlossen sind (Figuren 4a und 13b).

12. Vorrichtung nach Anspruch 9, **dadurch gekennzeichnet,** daß das Hochfrequenzfilter (128, 130) für das erste bzw. zweite Steuersignal jeweils aus einer vom ersten bzw. zweiten Inverter (124, 126) angesteuerten monostabilen Kippstufe (123, 125) besteht, dessen Ein- und Ausgangssignal als Eingangssignale für je ein erstes bzw. zweites NAND-Gatter (127, 129) dienen (Figuren 4a und 13b).

13. Vorrichtung nach Anspruch 9, **dadurch gekennzeichnet,** daß die Komplementüberwachungsvorrichtung aus je einem dritten und vierten NAND-Gatter (140, 142) besteht, an deren ersten Eingang jeweils das Ausgangssignal des entsprechenden Hochfrequenzfilters (128, 130) anliegt, an deren zweiten Eingang das durch je einen dritten bzw. vierten Inverter (141, 143) invertierte Signal vom ersten Eingang des jeweils anderen NAND-Gatters (142, 140) anliegt, und am Ausgang der NAND-Gatter die aufbereiteten ersten und zweiten Steuersignale (SF1, SF2) anstehen (Figuren 4b und 13b).

14. Vorrichtung nach einem der vorangegangenen Ansprüche, **gekennzeichnet durch** einen Schlupfdetektor in der vierten Steuerungsvorrichtung (38).

15. Vorrichtung nach einem der Ansprüche 9 bis 13, **gekennzeichnet durch** einen Schlupfdetektor in der vierten Steuerungsvorrichtung (38), der aus einer vom ersten aufbereiteten Steuersignal (SF1) angesteuerten nachtriggerbaren monostabile Kippstufe (144) besteht und ein erstes Freigabesignal erzeugt, wenn das erste aufbereitete Steuersignal länger am Eingang der Kippstufe ansteht als die durch die Kippstufe selbst vorgegebene Zeitdauer (Figuren 4b und 13c).

16. Vorrichtung nach Anspruch 15, **dadurch gekennzeichnet**, daß die vierte Steuerungsvorrichtung (38) einen ersten Signalspeicher (145, 146, 148) enthält, welcher durch das vom Schlupfdetektor (144) erzeugte erste Freigabesignal gesetzt wird (Figuren 4b und 13c).

17. Vorrichtung nach einem der vorangegangenen Ansprüche, **dadurch gekennzeichnet, daß** die vierte Steuerungsvorrichtung (38) einen Winkeldetektor enthält.

18. Vorrichtung nach einem der Ansprüche 15 oder 16 , **dadurch gekennzeichnet, daß** die vierte Steuerungsvorrichtung (38) einen Winkeldetektor enthält, der aus einer vom ersten aufbereiteten Steuersignal (SF1) angesteuerten dritten monostabilen Kippstufe (150) besteht und ein zweites Freigabesignal erzeugt, wenn die Stromrichtung durch den Anlaßwiderstand (28) von negativ nach positiv wechselt und der Strom in die positive Klemme (11) der Erregerwicklung (12) fließt (Figuren 4b und 13c).

19. Vorrichtung nach Anspruch 18, **dadurch gekennzeichnet, daß** die vierte Steuerungsvorrichtung (38) einen Ausgangssignal-Speicher (156) enthält, welcher das gleichzeitige Auftreten des ersten Freigabesignales des Schlupfdetektors und des zweiten Freigabesignales des Winkeldetektors erfaßt und das dritte Freigabesignal (FA) für die Zuschaltung der Erregung bildet (Figuren 4b und 13c).

20. Vorrichtung nach Anspruch 19, **dadurch gekennzeichnet, daß** die vierte Steuerungsvorrichtung (38) eine Schaltung (159) zum Rücksetzen des Ausgangssignal-Speichers (156) enthält, welche aktiv ist, wenn ein Stromfluß durch den Anlaßwiderstand detektiert wird und nicht aktiv ist, solange das zweite Freigabesignal des Winkeldetektors vorhanden ist (Figuren 4b und 13c).

21. Vorrichtung nach einem der Ansprüche 19 oder 20, **dadurch gekennzeichnet, daß** die vierte Steuerungsvorrichtung (38) einen Zeitgeber (163) enthält, welcher die Bildung des dritten Freigabesignales (FA) für die Zuschaltung der Erregung erst eine einstellbare Zeit nach Auftreten des ersten Freigabesignales des Schlupfdetektors (144) freigibt (Figuren 4b und 13c).

22. Vorrichtung nach einem der Ansprüche 5 bis 21, **dadurch gekennzeichnet, daß** die zweite bzw. dritte Steuerungsvorrichtung (34, 36) je eine Zündimpulsübertragervorrichtung (100) zur Übergabe der Zündimpulse von der vierten Steuerungsvorrichtung (38) an das erste bzw. zweite Halbleiterschaltelement (20, 22) enthält (Figuren 3b und 12).

23. Vorrichtung nach einem der Ansprüche 2 bis 22, **gekennzeichnet durch** eine Erregungsunterstützungsvorrichtung (71), welche bei Abnahme einer Versorgungsspannung für die bürstenlose Erregervorrichtung eine Erhöhung des Erregerstromflusses in die Erregerwicklung veranlaßt.

24. Vorrichtung nach einem der Ansprüche 3 bis 22, **dadurch gekennzeichnet, daß** die sechste Steuerungsvorrichtung (42) eine Erregungsunterstützungsvorrichtung (71) enthält, welche bei Abnahme einer Versorgungsspannung für die bürstenlose Erregervorrichtung durch Aufschalten eines weiteren Korrektursignales auf das Erregungskorrektursignal (FR) eine Erhöhung des Erregerstromflusses in die Erregerwicklung veranlaßt (Figuren 8 und 15).

25. Vorrichtung nach einem der Ansprüche 2 bis 24, **gekennzeichnet durch** eine Synchronisierschaltung (73), welche das Einkoppeln des Erregungskorrektursignales (FR) einmal in jeder Halbperiode der Netzfrequenz veranlaßt.

26. Vorrichtung nach einem der Ansprüche 3 bis 24 , **dadurch gekennzeichnet, daß** die siebte Steuerungsvorrichtung (44) eine Synchronisierschaltung (73) für den Sender (76) enthält, welche das Absenden des Erregungskorrektursignales (FR) einmal in jeder Halbperiode der Netzfrequenz veranlaßt (Figuren 9 und 16).

27. Vorrichtung nach Anspruch 25 oder 26, **dadurch gekennzeichnet, daß** ein Phasenkontrollschaltkreis (84) der Phasenkontrollschaltung in der vierten Steuerungsvorrichtung (38) so auf die Netzfrequenz synchronisiert wird, daß die Zündung des ersten bzw. zweiten Halbleiterschaltelementes (20, 22) nicht mit einer Übertragung des Erregungskorrektursignales zusammenfällt (Figuren 4a, 4b bzw. 13a).

28. Vorrichtung nach einem der vorangegangenen Ansprüche, **dadurch gekennzeichnet, daß** die erste Steuerungsvorrichtung (32) eine Diodengleichrichterbrücke (101) mit einer in der Brückendiagonalen angeordneten Zenerdiodenkette (104) enthält, welche zwischen den Steuerstrecken (G3, K3 ; G4, K4) der dritten und vierten Halbleiterschaltelemente (24, 26) angeordnet ist und einen Zündimpuls auf die Steuerstrecke des Halbleiterschaltelementes mit positiver AnodenKathoden-Spannung gibt, wenn der Betrag dieser Spannung die Durchbruchspannung der Zenerdiodenkette überschreitet (Figuren 2b und 11).

29. Vorrichtung nach Anspruch 28, **gekennzeichnet durch** je einen zwischen den Steuerstrecken (G3, K3 ; G4, K4) des dritten bzw. vierten Halbleiterschaltelementes (24, 26) und den beiden Anschlüssen der Diodengleichrichterbrücke angeschlossenen Zündimpulsformer (109, 111), welche die Amplitude und die steigende Flanke der Zündimpulse für das dritte bzw. vierte Halbleiterschaltelement vergrößern (Figuren 2b und 11).

30. Vorrichtung nach Anspruch 29, **dadurch gekennzeichnet,** daß jeder der Zündimpulsformer (109, 111) einen Kondensator (110, 112) am Eingang und je eine Vierschichtdiode (106, 108) in der Zuführung zur Gate-Elektrode (G3, G4) des jeweiligen Halbleiterschaltelementes (24, 26) enthält (Figuren 2b und 11).

31. Vorrichtung nach einem der vorangegangenen Ansprüche, **gekennzeichnet durch** eine parallel zu den antiparallelen Halbleiterschaltelementen (24, 26) angeordnete RC-Schutzbeschaltung (114), welche transiente Anteile der an den Halbleiterschaltelementen abfallenden Spannung dämpft (FIG 2a).

32. Vorrichtung nach Anspruch 31, **dadurch gekennzeichnet,** daß die RC-Schutzbeschaltung (114) in der ersten Steuerungsvorrichtung (32) enthalten ist (Figuren 2a und 11).

33. Vorrichtung nach einem der vorangegangenen Ansprüche, **gekennzeichnet durch** je eine parallel zum ersten bzw. zweiten Halbleiterschaltelement (20, 22) angeordnete RC-Schutzbeschaltung (102), welche transiente Anteile der an den Halbleiterschaltelementen abfallenden Spannung dämpft (FIG 3a).

34. Vorrichtung nach Anspruch 31, **dadurch gekennzeichnet,** daß die RC-Schutzbeschaltungen (102) in der zweiten und dritten Steuerungsvorrichtung (34, 36) enthalten sind (Figuren 3a und 12).

## Claims

1. Arrangement for brushless excitation of a synchronous machine (1) having

a) a rotating transformer (14) with secondary side (18) tapped in the centre (19),

b) a first and a second controllable semiconductor switching element (20, 22), the first corresponding electrodes of which, more particularly the anodes, are each connected with the secondary side of the rotating transformer, and the second, corresponding electrodes of which, more particularly the cathodes, are connected jointly with the one end (11) of the excitation winding (12), the other end (13) of which is connected to the centre of the secondary side of the rotating transformer (14),

c) a series circuit arrangement consisting of a starting resistor (28) and two anti-parallel third and fourth controllable semiconductor switching elements (24, 26) being arranged in parallel to the excitation winding,

d) a first control arrangement (32) which actuates the anti-parallel third and fourth semiconductor switching elements (24, 26) as a function of the voltage induced at the excitation winding (12),

e) respective identical second and third control arrangements (34, 36) actuating the first and second semiconductor switching elements (20, 22) respectively for the purpose of rectifying and adjusting the excitation current supplied to the excitation winding (12), and

f) a fourth control arrangement (38) which detects the current through the starting resistor (28) according to magnitude, frequency and phase position, determines, as a function thereof, points of time in which the excitation is connected or disconnected and accordingly activates the second and third control arrangements (34, 36) (Figures 1 and 10).

2. Arrangement according to claim 1, characterised by a comparator arrangement (41) which detects the excitation current on the primary side (16) of the rotating transformer (14), forms an excitation correction signal (CV) in the case of deviations from a reference value and couples it as an input variable for the fourth control arrangement (38) into the rotating part of the excitation arrangement (FIG 10).

3. Arrangement according to claim 2, characterised in that the comparator arrangement (41) contains

a) a fixed sixth control arrangement (42) which detects the excitation current on the primary side (16) of the rotating transformer (14) and forms the excitation correction signal (FR) in the case of deviations from the reference value,

b) a fixed seventh control arrangement (44) which as a transmitter (FIG 16, 76) emits (ANT) the excitation correction signal (FR), and

c) a rotating fifth control arrangement (40) which as receiver (Figures 14a, 14b, 80, 82) picks up (ANT) the excitation correction signal emitted from the seventh control arrangement as an input variable (CV) for the fourth control arrangement (38) (Figures 1 and 10).

4. Arrangement according to claim 3, characterised by a phase control circuit arrangement which converts the excitation correction signal (FR) into pulse width-modulated firing pulses for the first or second semiconductor switching element (20, 22) respectively.

5. Arrangement according to claim 4, characterised in that the fourth control arrangement (38) contains the phase control circuit arrangement and retransmits the pulse width-modulated firing pulses to the second or third control arrangement (34, 36) respectively (Figures 1 and 10).

6. Arrangement according to one of the claims 4 or 5, characterised in that the fourth control arrangement contains a switching circuit for the control of the excitation circuit connection, which supplies to the phase control circuit arrangement a third enabling signal (FA) for the connection of the excitation (Figures 4a, 4b or 13b, 13c).

7. Arrangement according to claim 6, characterised in that the fourth control arrangement (38) contains an optocoupler arrangement (116) which detects the voltage at the starting resistor (28) and forms, as a function of magnitude, sign and frequency of the current through the starting resistor, respectively a first and second control signal (S1, S2) (Figures 4a and 13b).

8. Arrangement according to claim 7, characterised in that the fourth control arrangement (38) contains a signal processing arrangement (120) for the first and second control signal (S1, S2) for the purpose of filtering disturbances (Figures 4a, 4b and 13b).

9. Arrangement according to claim 8, characterised in that the signal processing arrangement (120) contains respectively an RC filter (122), a signal shaper (124, 126), a high frequency filter (128, 130) and a complement monitoring arrangement (140 to 143) and forms respectively a first and second processed control signal (SF1, SF2) (Figures 4a, 4b and 13b).

10. Arrangement according to claim 9, characterised in that the RC filter (122) contains respectively a first and third resistor (111, 117) arranged between an output of the optocoupler arrangement (122) and earth for the purpose of receiving the first and second control signal and there is arranged parallel thereto respectively a series circuit arrangement consisting of a second resistor (113) and a first capacitor (115) or a fourth resistor (119) and a second capacitor (121) for filtering the first or second control signal respectively (Figures 4a and 13b).

11. Arrangement according to claim 9, characterised by a first or second inverter as signal shaper for the first or second control signal (124, 126), connected to the connection of the second resistor (113) with the first capacitor (115) or the fourth resistor (119) with the second capacitor (121) respectively (Figures 4a and 13b).

12. Arrangement according to claim 9, characterised in that the high frequency filter (128, 130) for the first or second control signal respectively consists, in each case, of a monostable flip-flop (123, 125), activated by the first or second inverter (124, 126), the input and output signal of which serve as input signals for first and second NAND gates (127, 129) respectively (Figures 4a and 13b).

13. Arrangement according to claim 9, characterised in that the complement monitoring arrangement consists of respectively a third and fourth NAND gate (140, 142) to the first input of which there is applied the respective output signal of the corresponding high frequency filter (128, 130), to the second input of which there is applied the signal, inverted by a third or fourth inverter (141, 143) respectively, from the first input of the other respective NAND gate (142, 140) and at the output of the NAND gates there occur the processed first and second control signals (SF1, SF2) (Figures 4b and 13b).

14. Arrangement according to one of the preceding claims, characterised by a slip detector in the fourth control arrangement (38).

15. Arrangement according to one of the claims 9 to 13, characterised by a slip detector in the fourth control arrangement (38) which consists of a retriggerable monostable flip-flop (144) activated by the first processed control signal (SF1) and generates a first enabling signal if the first processed control signal occurs at the input of the flip-flop for a period longer than the duration preset by the flip-flop itself (Figures 4b and 13c).

16. Arrangement according to claim 15, characterised in that the fourth control arrangement (38) contains a first signal latch (145, 146, 148) which is set by the first enabling signal generated by the slip detector (144) (Figures 4b and 13c).

17. Arrangement according to one of the preceding claims, characterised in that the fourth control arrangement (38) contains an angle detector.

18. Arrangement according to one of the claims 15 or 16, characterised in that the fourth control arrangement (38) contains an angle detector which consists of a third monostable flip-flop (150) activated by the first processed control signal (SF1) and generates a second enabling signal if the current direction through the starting resistor (28) changes from negative to positive and the current flows into the positive terminal (11) of the excitation winding (12) (Figures 4b and 13c).

19. Arrangement according to claim 18, characterised in that the fourth control arrangement (38) contains an output signal latch (156) which detects the simultaneous occurrence of the first enabling signal of the slip detector and the second enabling signal of the angle detector and forms the third enabling signal (FA) for the connection of the excitation (Figures 4b and 13c).

20. Arrangement according to claim 19, characterised in that the fourth control arrangement (38) contains a circuit arrangement (159) for resetting the output signal latch (156), this being active if a current flow through the starting resistor is detected and not active as long as the second enabling signal of the angle detector is present (Figures 4b and 13c).

21. Arrangement according to one of the claims 19 or 20, characterised in that the fourth control arrangement (38) contains a timer (163) which only enables the formation of the third enabling signal (FA) for the connection of the excitation an adjustable time after occurrence of the first enabling signal of the slip detector (144) (Figures 4b and 13c).

22. Arrangement according to one of the claims 5 to 21, characterised in that the second or third control arrangement (34, 36) respectively contains a firing pulse transformer arrangement (100) for passing the firing pulses from the fourth control arrangement (38) to the first or second semiconductor switching element (20, 22) respectively (Figures 3b and 12).

23. Arrangement according to one of the claims 2 to 22, characterised by an excitation support arrangement (71) which with drop of a supply voltage for the brushless excitation arrangement causes an increase in the excitation current flow into the excitation winding.

24. Arrangement according to one of the claims 3 to 22, characterised in that the sixth control arrangement (42) contains an excitation support arrangement (71) which with drop of a supply voltage for the brushless excitation arrangement by means of application of a further correction signal to the excitation correction signal (FR) causes an increase in the excitation current flow into the excitation winding (Figures 8 and 15).

25. Arrangement according to one of the claims 2 to 24, characterised by a synchronizing circuit arrangement (73) which causes the coupling-in of the excitation correction signal (FR) once in each half-period of the network frequency.

26. Arrangement according to one of the claims 3 to 24, characterised in that the seventh control arrangement (44) contains a synchronizing circuit arrangement (73) for the transmitter (76), which circuit arrangement causes the excitation correction signal (FR) to be sent once in each half-period of the network frequency (Figures 9 and 16).

27. Arrangement according to claim 25 or 26, characterised in that a phase control switching circuit (84) of the phase control circuit arrangement in the fourth control arrangement (38) is synchronized to the network frequency in such a way that the firing of the first or second semiconductor switching element (20, 22) does not coincide with a transmission of the excitation correction signal (Figures 4a, 4b or 13a).

28. Arrangement according to one of the preceding claims, characterised in that the first control arrangement (32) contains a diode rectifier bridge (101) which has a Zener diode chain (104) arranged in the bridge diagonal, is arranged between the control sections (G3, K3 ; G4, K4) of the third and fourth semiconductor switching elements (24, 26) and transmits a firing pulse to the control section of the semiconductor switching element with positive anodecathode voltage when the magnitude of this voltage exceeds the break-down voltage of the Zener diode chain (Figures 2b and 11).

29. Arrangement according to claim 28, characterised by a respective firing pulse shaper (109, 111) connected between the control sections (G3, K3 ; G4, K4) of the third or fourth semiconductor switching element (24, 26) respectively and the two connections of the diode rectifier bridge and increasing the amplitude and the rising edge of the firing pulses for the third or fourth semiconductor switching element (Figures 2b and 11).

30. Arrangement according to claim 29, characterised in that each of the firing pulse shapers (109, 111) contains a capacitor (110, 112) at the input and a respective four-layer diode (106, 108) in'the feed to the gate electrode (G3, G4) of the respective semiconductor switching element (24, 26) (Figures 2b and 11).

31. Arrangement according to one of the preceding claims, characterised by an RC-suppressor circuit arrangement (114) which is arranged in parallel with the anti-parallel semiconductor switching elements (24, 26) and attenuates transient portions of the voltage dropping at the semiconductor switching elements (FIG 2a).

32. Arrangement according to claim 31, characterised in that the RC-suppressor circuit arrangement (114) is contained in the first control arrangement (32) (Figures 2a and 11).

33. Arrangement according to one of the preceding claims, characterised by a respective RC-suppressor circuit arrangement (102) arranged in parallel with the first or second semiconductor switching element (20, 22) respectively and attenuating transient portions of the voltage dropping at the semiconductor switching elements (FIG 3a).

34. Arrangement according to claim 31, characterised in that the RC-suppressor circuit arrangements (102) are contained in the second and third control arrangement (34, 36) (Figures 3a and 12).

## Revendications

1. Dispositif pour réaliser l'excitation, sans balais d'une machine synchrone (1) comportant

a) un convertisseur rotatif (14) comportant un côté secondaire (18) possédant une prise centrale (19),

b) des premier et second éléments commandables (20, 22) à semiconducteurs, dont des premières électrodes coïncidantes, notamment les anodes, sont reliées respectivement au côté secondaire du transformateur rotatif et dont les secondes électrodes coïncidantes, notamment les cathodes, sont raccordées en commun à une première extrémité (11) de l'enroulement d'excitation (12) raccordé par l'autre extrémité (13) au centre du côté secondaire du convertisseur rotatif (14),

c) un circuit série formé d'une résistance de démarrage (28) et de deux éléments, c'est-à-dire de troisième et quatrième éléments commandables antiparallèles à semiconducteurs (24, 26), et branché en parallèle avec l'enroulement d'excitation,

d) un premier dispositif de commande (32), qui actionne les troisième et quatrième éléments antiparallèles à semiconducteurs (24, 26) en fonction de la tension induite dans l'enroulement d'excitation (12),

e) des second et troisième dispositifs identiques de commande (34, 36), qui actionnent les premier et second éléments de commutation à semiconducteurs (20, 22) pour le redressement et le réglage du courant d'excitation envoyé à l'enroulement d'excitation (12), et

f) un quatrième dispositif de commande (38), qui détermine la grandeur, la fréquence et la position de phase du courant traversant la résistance de démarrage (28), en fonction d'instants, auxquels l'excitation est appliquée ou débranchée et commande de façon correspondante les second et troisième dispositifs de commande (34, 36) (figures 1 et 10),

2. Dispositif selon la revendication 1, caractérisé par un dispositif comparateur (41), qui détermine le courant d'excitation sur le côté primaire (16) du convertisseur rotatif (14), forme un signal de correction d'excitation (CV) dans le cas d'écarts par rapport à une valeur de référence et injecte ce signal en tant que grandeur d'entrée pour le quatrième dispositif de commande (38) dans la partie rotative du dispositif d'excitation (figure 10).

3. Dispositif suivant la revendication 2, caractérisé par le fait que le dispositif comparateur (41) contient

a) un sixième dispositif fixe de commande (42), qui détermine le courant d'excitation sur le côté primaire (16) du convertisseur rotatif (14) et forme le signal de correction d'excitation (FR) dans le cas d'écarts par rapport à la valeur de référence,

b) un septième dispositif fixe de commande (44), qui, en tant qu'émetteur (figures 16, 76), délivre (ANT) le signal de correction d'excitation (FR), et

c) un cinquième dispositif de commande rotatif (40), qui, en tant que récepteur (figures 14a, 14b, 80, 82), reçoit (ANT) le signal de correction d'excitation, délivré par le septième dispositif de commande, en tant que grandeur d'entrée (CV) pour le quatrième dispositif de commande 38 (figures 1 et 10).

4. Dispositif suivant la revendication 3, caractérisé par un circuit de commande de phase, qui convertit le signal de correction d'excitation (FR) en ces impulsions d'amorçage, modulées au moyen d'une modulation d'impulsions en durée, pour le premier ou le second élément de commutation à semiconducteurs (20, 22).

5. Dispositif suivant la revendication 4, caractérisé par le fait que le quatrième dispositif de commande (38) contient le circuit de commande de phase et retransmet les impulsions d'amorçage, modulées selon une modulation d'impulsions en durée, au second ou au troisième dispositif de commande (34, 36) (figures 1 et 10).

6. Dispositif suivant l'une des revendications 4 ou 5, caractérisé par le fait que le quatrième dispositif de commande contient un circuit de commutation servant à commander le raccordement du circuit d'excitation, qui envoie au circuit de commande de phase un troisième signal de libération (FR) pour le raccordement de l'excitation (figures 4a, 4b ou 13b, 13c).

7. Dispositif suivant la revendication 6, caractérisé par le fait que le quatrième dispositif de commande (38) contient un dispositif formant optocoupleur (116), qui détecte la tension aux bornes de la résistance de démarrage (28) et forme respectivement des premier et second signaux de commande (S1, S2) en fonction de la grandeur, du signe ou de la fréquence du courant traversant la résistance de démarrage (figures 4a et 13b).

8. Dispositif suivant la revendication 7, caractérisé par le fait que le quatrième dispositif de commande (38) contient un dispositif de préparation de signaux (120) pour les premier et second signaux de commande (S1, S2) pour réaliser le filtrage de perturbations (figures 4a, 4b et 13b).

9. Dispositif suivant la revendication 8, caractérisé par le fait que le dispositif de préparation de signaux (120) contient respectivement un filtre RC (122), un dispositif de mise en forme des signaux (124, 126), un filtre pour hautes fréquences (128, 130) et un dispositif de contrôle complémentaire (140 à 143), et forme respectivement des premier et second signaux de commande préparés (SF1, SF2) (figures 4a, 4b et 13b).

10. Dispositif suivant la revendication 9, caractérisé par le fait que le filtre RC (122) contient respectivement des première et troisième résistances (111, 117) disposées entre une sortie du dispositif formant optocoupleur (122) et la masse, pour la réception des premier et second signaux de commande, et qu'en parallèle avec ces résistances sont branchés respectivement un circuit série formé d'une seconde résistance (113) et d'un premier condensateur (104) et un circuit série formé d'une quatrième résistance (119) et d'un second condensateur (121) pour filtrer le premier ou le second signal de commande (figures 4a et 13b).

11. Dispositif suivant la revendication 9, caractérisé par un premier et un second inverseurs en tant que circuits de mise en forme des signaux pour les premier et second signaux de commande (124, 126), qui sont raccordés à la jonction entre la seconde résistance (113) et le premier condensateur (115) et à la jonction entre la quatrième résistance (119) et le second condensateur (121) (figures 4a et 13b).

12. Dispositif suivant la revendication 9, caractérisé par le fait que le filtre à haute fréquence (128, 130) pour le premier ou le second signal de commande est constitué respectivement par un étage à bascule monostable (123, 125), qui est commandé par le premier ou le second inverseur (124, 126) et dont les signaux d'entrée et de sortie sont utilisés comme signaux d'entrée pour une première ou seconde porte NON-ET respective (127, 129) (figures 4a et 13b).

13. Dispositif suivant la revendication 9, caractérisé par le fait que le dispositif de contrôle complémentaire est constitué par des troisième et quatrième portes NON-ET (140, 142), à la première entrée duquel est appliqué respectivement le signal de sortie du filtre à hautes fréquences correspondant (128, 130), à la seconde entrée duquel est appliqué le signal, inversé respectivement par un troisième ou un quatrième inverseur (141, 143), de la première sortie de l'autre porte NON-ET respective (142, 140), et que les premier et second signaux préparés de commande (SF1, SF2) sont présents sur la sortie des portes NON-ET (figure 4b et 13b).

14. Dispositif suivant l'une des revendications précédentes, caractérisé par un détecteur de glissement disposé dans le quatrième dispositif de commande (38).

15. Dispositif suivant l'une des revendications 9 à 13, caractérisé par un détecteur de glissement, qui est disposé dans le quatrième dispositif de commande (38), est constitué par un étage à bascule monostable redéclenchable (144), commandé par le premier signal préparé de commande (SF1), et produit un premier signal de libération lorsque le premier signal de commande préparé est appliqué à l'entrée de l'étage à bascule pendant une durée supérieure à la durée prédéterminée dans l'étage à bascule lui-même (figures 4b et 13c).

16. Dispositif suivant la revendication 15, caractérisé par le fait que le quatrième dispositif de commande (38) contient une première mémoire de signaux (145, 146, 148), qui est positionnée par le premier signal de libération produit par le détecteur de glissement (144) (figures 4b et 13c).

17. Dispositif suivant l'une des revendications précédentes, caractérisé par le fait que le quatrième dispositif de commande (38) contient un détecteur d'angles.

18. Dispositif suivant l'une des revendications 15 ou 16, caractérisé par le fait que le quatrième dispositif de comamnde (38) contient un détecteur d'angles, qui est constitué par un troisième étage à bascule monostable (150) commandé par le premier signal préparé de commande (SF1) et produit un second signal de libération, lorsque le sens du courant dans la résistance de démarrage (28) alterne entre le sens négatif et le sens positif et que le courant pénètre dans la borne positive (11) de l'enroulement d'excitation (12) (figures 4b et 13c).

19. Dispositif selon la revendication 18, caractérisé en ce que le quatrième dispositif de commande (38) contient une mémoire de signaux de sortie (156), qui détecte l'apparition simultanée du premier signal de libération du détecteur de glissement et du second signal de libération du détecteur d'angles et forme le troisième signal de libération (FA) pour l'application de l'excitation (figures 4b et 13c).

20. Dispositif suivant la revendication 19, caractérisé par le fait que le quatrième dispositif de commande (38) contient un circuit (159), qui sert à ramener à l'état initial la mémoire de signaux de sortie (156), est active lorsqu'un flux de courant est détecté dans la résistance de démarrage, et n'est pas active tant que le second signal de libération du détecteur d'angles est présent (figures 4b et 13c).

21. Dispositif suivant l'une des revendications 19 ou 20, caractérisé par le fait que le quatrième dispositif de commande (38) contient une minuterie (163), qui libère la formation du troisième signal de libération (FA) pour l'application de l'excitation, uniquement au bout d'un intervalle de temps réglable après l'apparition du premier signal de libération du détecteur de glissement (144) (figures 4b et 13c).

22. Dispositif suivant l'une des revendications 5 à 21, caractérisé par le fait que le second ou le troisième dispositif de commande (34, 36) contient respectivement un dispositif (100) de transmission d'impulsions d'amorçage servant à transférer des impulsions d'amorçage du quatrième dispositif de commande (38) au premier ou second élément de commutation à semiconducteurs (20, 22) (figures 3b et 12).

23. Dispositif suivant l'une des revendications 2 à 22, caractérisé par un dispositif d'assistance d'excitation (71), qui, lors de la réduction d'une tension d'alimentation pour le dispositif d'excitation sans balai, déclenche un accroissement du flux de courant d'excitation dans l'enroulement d'excitation.

24. Dispositif suivant l'une des revendications 3 à 22, caractérisé par le fait que le sixième dispositif de commande (42) contient un dispositif d'assistance d'excitation (71), qui, lors de la réduction d'une tension d'alimentation pour le dispositif d'excitation sans balai, déclenche, au moyen de l'addition d'un autre signal de correction au signal de correction d'excitation (FR), un accroissement du flux de courant d'excitation dans l'enroulement d'excitation (figures 8 et 15).

25. Dispositif suivant l'une des revendications 2 à 24, caractérisé par un circuit de synchronisation (73), qui déclenche l'injection du signal de correction d'excitation (FR) une fois pendant chaque alternance de la fréquence du réseau.

26. Dispositif selon l'une des revendications 3 à 24, caractérisé par le fait que le septième dispositif de commande (44) contient un circuit de synchronisation (73) pour l'émetteur (76), qui déclenche l'émission du signal de correction d'excitation (FR) une fois pendant chaque alternance de la fréquence du réseau (figures 9 et 16).

27. Dispositif suivant l'une des revendications 25 à 26, caractérisé par le fait qu'un circuit (84) présent dans le circuit de contrôle de la phase dans le quatrième dispositif de commande (38) est synchronisé sur la fréquence du réseau de telle sorte que l'amorçage du premier ou du second élément de commutation à semiconducteurs (20, 22) ne coïncide pas avec une transmission du signal de correction d'excitation figures 4a, 4b ou 13a).

28. Dispositif suivant l'une des revendications précédentes, caractérisé par le fait que le premier dispositif de commande (32) contient un pont redresseur à diodes (101), qui comporte une chaîne de diodes Zener (104) disposées dans la diagonale du pont et est disposé entre les sections de commande (G3, K3; G4, K4) des troisième et quatrième éléments de commutation à semiconducteurs (24, 26) et envoie une impulsion d'amorçage à la section de commande de l'élément de commutation à semiconducteurs, avec une tension anode-cathode positive, lorsque la valeur de cette tension dépasse la tension de claquage de la chaîne de diodes Zener (figures 2b et 11).

29. Dispositif suivant la revendication 28, caractérisé par des circuits respectifs (109, 111) de mise en forme des impulsions d'amorçage, qui sont branchés entre les sections de commande (G3, K3 ; G4, K4) des troisième et quatrième éléments de commutation à semiconducteurs (24, 26) et les deux bornes du pont redresseur à diodes et augmentent l'amplitude et le flanc montant des impulsions d'amorçage pour les troisième et quatrième éléments de commutation à semiconducteurs (figures 2b et 11).

30. Dispositif suivant la revendication 29, caractérisé par le fait que chacun des circuits (109, 111) de mise en forme des impulsions d'amorçage contient un condensateur (110, 112) installé à l'entrée et respectivement une diode à quatre couches (106, 108), insérée dans l'alimentation aboutissant à l'électrode de grille (G3, G4) de l'élément respectif de commutation à semiconducteurs (24, 26) (figures 2b et 11).

31. Dispositif suivant l'une des revendications précédentes, caractérisé par un circuit de protection RC (114), qui est branché en parallèle avec les éléments antiparallèles de commutation à semiconducteurs (24, 26) et amortit des composantes transitoires de la tension qui chute dans les éléments de commutation à semiconducteurs (figure 2a).

32. Dispositif suivant la revendication 31, caractérisé par le fait que le circuit de protection RC (114) est contenu dans le premier dispositif de commande (32) (figures 2a et 11).

33. Dispositif suivant l'une des revendications précédentes, caractérisé par des circuits respectifs de protection RC (102), qui sont branchés en parallèle avec les premier et second éléments de commutation à semiconducteurs (20, 22) et amortissent les composantes transitoires de la tension chutant dans les éléments de commutation à semiconducteurs (figure 3a).

34. Dispositif suivant la revendication 31, caractérisé par le fait que les circuits de protection RC (102) sont contenus dans les second et troisième dispositifs de commande (34, 36) (figures 3a et 12).

FIG I

FIG 3b

FIG 3a

FIG 2b

FIG 2a

FIG 4a

FIG 4b

FIG 5

**FIG 6**

FIG 7

FIG 8

# FIG 9

FIG 10

32

101

104

106

110

109

G3

K3

108

112

111

G4

K4

114

25

27

**FIG 11**

34(36)

100

38

GT1(GT2)

1
2
5
6
3
4

102

G1(G2)

K1(K2)

15(21)

**FIG 12**

FIG 13

FIG 13A

EP 0 247 352 B1

FIG 13B

SF1

SF2

$+U_{V2}$

EP 0 247 352 B1

FIG 13C

FIG 14A

FIG 14

FIG 14A
FIG 14B

LM 1872

EP 0 247 352 B1

FIG 14B

FIG 15

FIG 16

EP 0 247 352 B1